(19) Europäisches Patentamt / European Patent Office / Office européen des brevets

(11) **EP 2 381 031 A1**

(12) **EUROPEAN PATENT APPLICATION**
published in accordance with Art. 153(4) EPC

(43) Date of publication:
**26.10.2011 Bulletin 2011/43**

(51) Int Cl.:
**D06M 15/564** (2006.01)

(21) Application number: **10731317.3**

(22) Date of filing: **18.01.2010**

(86) International application number:
**PCT/JP2010/050467**

(87) International publication number:
**WO 2010/082648 (22.07.2010 Gazette 2010/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.01.2009 JP 2009009387**
**23.04.2009 JP 2009104922**
**28.09.2009 JP 2009222360**

(71) Applicants:
• **Unitika Trading Co., Ltd.**
  **Chuo-ku**
  **Osaka**
  **541-0048 (JP)**
• **SEIREN CO., LTD.**
  **Fukui-shi, Fukui 918-8003 (JP)**

(72) Inventors:
• **NAKAGAWA Kiyoshi**
  **Osaka-shi**
  **Osaka 541-0058 (JP)**

• **KURUSHIMA Yoshiaki**
  **Osaka-shi**
  **Osaka 541-0058 (JP)**
• **OKUBO Munemasa**
  **Osaka-shi**
  **Osaka 541-0058 (JP)**
• **TOYOFUKU Kohei**
  **Osaka-shi**
  **Osaka 541-0058 (JP)**
• **MIZUMA Masahiro**
  **Fukui-shi**
  **Fukui 918-8003 (JP)**
• **KATO Ken**
  **Fukui-shi**
  **Fukui 918-8003 (JP)**

(74) Representative: **HOFFMANN EITLE**
**Patent- und Rechtsanwälte**
**Arabellastraße 4**
**81925 München (DE)**

(54) **MOISTURE-PERMEABLE AND WATER-PROOF FABRIC AND PROCESS FOR THE PRODUCTION OF SAME**

(57)     [The problem] This invention provides a waterproof and moisture-permeable fabric which prevents to lower in a water pressure resistance, repetitively washed

[The means] The waterproof and moisture-permeable fabric consists of a body of a fabric and a microporous film of mainly polyurethane which is laid on the body. The microporous film contains 1 to 9 mass% of fluorinated water repellent agent, 0.1 to 2 mass% of oil-soluble fluorinated surfactant and if necessary 3 to 45 mass% of fine silica powders. The waterproof and moisture-permeable fabric is obtained by the following method. After coating a resin compound on the surface of the body, the resin compound is dipped in a coagulating bath to form the microporous film. The resin compound dissolves or disperses mainly polyurethane, 1 to 9 mass% of fluorinated water repellent agent, 0.1 to 2 mass% of oil-soluble fluorinated surfactant and if necessary 3 to 45 mass% of fine silica powders in N,N-dimethylformamide. The coagulating bath is an aqueous solution containing less than 30 mass% of N,N-dimethylformamide.

**Description**

Technical Field

The present invention relates to a fabric having superior waterproof property and moisture-permeability and a method for producing thereof. Especially, the invention relates to the fabric which is suitable as a material of sports wears and winter wears, and the method for producing thereof.

Background Art

The waterproof property and moisture-permeability are required for the sports wears and winter wears. The waterproof property prevents that a rain water permeates into the wears. The moisture-permeability releases a vapor of sweat outside the wears. Therefore, a waterproof and moisture-permeable fabric is used as the material of sports wears and winter wears.

The waterproof and moisture-permeable fabric is obtained with the following method. After coating a resin composition of mainly polyurethane resin for forming a fine porous film on a body of a fabric, they are dipped in a water to wet-coagulate the resin composition or they are dried without dipping in a water. The waterproof and moisture-permeable fabric consists of the body of the fabric and a fine porous film formed on the body. For example, the patent reference 1 discloses the following method for producing the waterproof and moisture-permeable fabric. That is, after coating a resin composition including polyurethane resin, water repellent agent and silica fine powders on a body of a fabric, they are dipped in a water to wet-coagulate the resin composition. The obtained waterproof and moisture-permeable fabric has high moisture permeability and high water pressure resistance, that is, superior moisture-permeability and waterproof property.

Patent reference 1: JP7-166479

**Description of the Intention**

Problem to be solved by the invention

The waterproof and moisture-permeable fabric disclosed in the patent reference 1 has high water pressure resistance at first. However, repetitively washing it, the water pressure resistance lowers and it lacks the waterproof property. The invention provides a waterproof and moisture-permeable fabric of which the water pressure resistance is difficult to lower, repetitively washing.

Means for solving the problem

To solve the above problem, the invention adopted to mix an oil-soluble fluorinated surfactant in the resin composition for forming a fine porous film, that is, to include the oil-soluble fluorinated surfactant in the fine porous film. The invention relates to a waterproof and moisture-permeable fabric which comprises of a body of a fabric and a microporous film laid on the surface of the body, and the microporous film includes 1 to 9 mass% of fluorinated water repellent agent and 0.1 to 2 mass% of oil-soluble fluorinated surfactant. Furthermore, the invention relates to a method for producing the waterproof and moisture-permeable fabric.

Explanation of the body of the fabric

As the body of the fabric in the invention, a textile fabric, knitting fabric or nonwoven fabric are generally used. The textile fabric, knitting fabric or nonwoven fabric are made of nylon 6 filaments or nylon 66 filaments typical of polyamide filaments, polyethylene terephthalate filaments typical of polyester filaments, polyacrylonitrile filaments, polyvinyl alcohol filaments, triacetate filaments or mixed fibers of nylon 6 fibers / cotton fibers or polyethylene terephthalate fibers / cotton fibers.

It is preferable that the body of the fabric is water repellent. The water repellent treatment may be carried out with dipping the body in an emulsion including water repellent agent or coating the emulsion onto the surface of the body. As the emulsion, an emulsion including fluorinated water repellent agent, silicone water repellent agent or paraffin water repellent agent may be used. It is preferable in the invention to use the emulsion including fluorinated water repellent agent. Especially, It is preferable that the fluorinated water repellent agent does not include a perfluorooctanoic acid and does not gradually form the perfluorooctanoic acid. The perfluorooctanoic acid may injure the global environment because it is difficult to decompose and it remains in the environment. As a preferable fluorinated water repellent agent, it may use the polymer which is obtained by polymerizing an acrylate compound having a perfluoroalkyl group having 1 to 6 carbon atoms in a side chain. For example, Asahi-Guard AG-E061 sold by Asahi Glass Co., Ltd., Unidyne TG-5521 sold by Daikin Industries, Ltd., NK-Guard SCH-02 sold by Nicca Chemical Co., Ltd. or NUVA N2114 LIQ sold by Clariant Japan Co., Ltd. may be used.

As the method for obtaining the water repellent body, well-known method such as padding, coating, gravure coating or spraying method may be used. The both surfaces of the body are water repellent with the padding method as the followings. That is, after being impregnated with the emulsion including water repellent agent, the body is squeezed with a mangle to adjust a quantity of the water repellent agent in the body. After the body is dried at 80°C to 150°C, the water repellent agent is cured for 30 seconds to 2 minutes at 150 °C to 180°C to obtain the body the both surfaces of which are water repellent. The one surface of the body is water repellent with the gravure coating method as the followings. That is, the emulsion including water repellent agent is coated on the one surface of the body with a gravure roll of high mesh density, thereafter it is carried out to dry and cure in the above condition to obtain the body the one surface of which is water repellent. It is preferable to close the surface of the body through a pair of calender rolls having a specular roll after drying and curing. In the case of closing the surface of the body, it may be prevented that a resin composition for forming the microporous film which is coated later penetrates deeply inside of the body.

The water repellent agent is preferably contained in the body of the fabric at 0.1 to 3 mass%, more preferably 0.3 to 2 mass%. Being contained less than 0.1 mass%, it is difficult to obtain the sufficiently water repellent body. Being contained more than 3 mass%, an obtained waterproof and moisture-permeable fabric tends to hard. Furthermore, it tends to lower an adhesion to the microporous film or a moisture permeability of the microporous film.

The water repellent agent may be mixed with a triazine compound or an isocyanate compound in the emulsion. It is preferably the isocyanate compound for the environment. Furthermore, it is preferably the thermal dissociated isocyanate compound which protects the isocyanate group with an acetoxime, phenol or caprolactam for stably treating the emulsion including water repellent agent.

Explanation of the microporous film

The microporous film mainly consists of the polyurethane resin and is laid on the surface of the body of the fabric. The microporous film is obtained by coagulating or drying the following resin composition for forming the microporous film. The resin composition is fluid and includes mainly the polyurethane resin, 1 to 9 mass% of fluorinated water repellent agent and 0.1 to 2 mass% of oil-soluble fluorinated surfactant. The resin composition may include 3 to 45 mass% of silica fine powders additionally in the invention.

Explanation of the polyurethane resin in the resin composition

The polyurethane resin is obtained by polymerizing polyisocyanate and polyol. As the polyisocyanate, aromatic diisocyanate, aliphatic diisocyanate and alicyclic diisocyanate are used by itself or mixture. Concretely, tolylene 2,4-diisocyanate, 4,4'-diphenylmethane diisocyanate, 1,6-hexane diisocyanate or 1,4-cyclohexane diisocyanate are mainly used. If necessary, polyisocyanate having 3 or more functional groups may be used additionally. As the polyol, polyether polyol or polyester polyol is used. As the polyether polyol, polyethylene glycol, polypropylene glycol or polytetramethylene glycol is used. As the polyester polyol, product by reacting diol such as ethylene glycol or propylene glycol with dibasic acid such as adipic acid or sebacic acid is used. Furthermore, product by ring-opened polymerizing caprolactone or by polymerizing oxyacid monomer or prepolymer is used. As the polyol, polyethylene glycol or polyoxypropylene polyoxyethylene copolymer which contains much polyoxyethylene group is preferably used to give high moisture permeability.

Explanation of the fluorinated water repellent agent in the resin composition

The fluorinated water repellent agent is well known. It is easy to mix the fluorinated water repellent agent with the fluorinated surfactant. Therefore, it is easy to prepare or coat the resin composition. Especially, It is preferable that the fluorinated water repellent agent does not include a perfluorooctanoic acid and does not gradually form the perfluorooctanoic acid. The perfluorooctanoic acid may injure the global environment because it is difficult to decompose and it remains in the environment. As a preferable fluorinated water repellent agent, it may use the polymer which is obtained by polymerizing an acrylate compound having a perfluoroalkyl group having 1 to 6 carbon atoms in a side chain. For example, Asahi-Guard AG-E061 sold by Asahi Glass Co., Ltd., Unidyne TG-5521 sold by Daikin Industries, Ltd., NK-Guard SCH-02 sold by Niaca Chemical Co., Ltd. or NUVA N2114 LIQ sold by Clariant Japan Co., Ltd. may be used.

The resin composition includes 1 to 9 mass% of fluorinated water repellent agent in solid. Including less than 1 mass%, it tends to adsorb a detergent in each microporous of the microporous film, repetitively washing. In the case of absorbing the detergent in each microporous, it is not preferable to lower wash resistance because water is easy to enter in the microporous. The wash resistance means the difficulty of lowering the water pressure resistance, repetitively washing. Including more than 9 mass%, it is difficult to uniformly coat the resin composition and to form a uniform microporous film because the stability of the resin composition lowers. As the result, it is not preferable because the water pressure resistance and the wash resistance are lowered.

Explanation of the oil-soluble fluorinated surfactant in the resin composition

The oil-soluble fluorinated surfactant has a hydrophobic group of a perfluoroalkyl group and a hydrophilic group of a polyoxyethylene group or polyoxypropylene group. The oil-soluble means to solve or be compatible more than 50 mass% in toluene. That is, when 100 parts by mass of toluene are mixed and stirred with 50 parts by mass of fluorinated surfactant, the mixture does not separate at two phases after one hour. The oil-soluble fluorinated surfactant is uniformly solved or dispersed in the resin composition including organic solvent. By the surface activity of the fluorinated surfactant, the fluorinated water repellent agent uniformly exists in the microporous film. As the oil-soluble fluorinated surfactant, SURFLON S-651, SURFLON S-611, SURFLON S-386 or SURFLON S-243 sold by AGC Seimi Chemical Co., Ltd. is used.

It is especially preferable to use the oil-soluble and water-soluble fluorinated surfactant. In the case that a water additionally exists in the resin composition, the oil-soluble and water-soluble fluorinated surfactant is superiorly solved or dispersed in the resin composition. The water-soluble means to solve or be compatible more than 50 mass% in water. That is, when 100 parts by mass of water are mixed and stirred with 50 parts by mass of fluorinated surfactant, the mixture does not separate at two phases after one hour. As the oil-soluble and water-soluble fluorinated surfactant, SURFLON S-386 or SURFLON S-243 sold by AGC Seimi Chemical Co., Ltd. is used.

A fluorinated surfactant which is water-soluble and is not oil-soluble cannot be used in the invention. As the fluorinated surfactant, SURFLON S-241, SURFLON S-221 or SURFLON S-211 is sold by AGC Seimi Chemical Co., Ltd., but they cannot be used. Furthermore, a fluorinated surfactant which is not water-soluble and is not oil-soluble cannot be used in the invention. As the fluorinated surfactant, SURFLON S-420 is sold by AGC Seimi Chemical Co., Ltd., but it cannot be used.

The typical fluorinated surfactant has a hydrophobic group of a perfluoroalkyl group having 1 to 6 carbon atoms and has a hydrophilic group of a polyoxyethylene group or polyoxypropylene group. For example, as the typical fluorinated surfactant, the oligomer by polymerizing an acrylate compound having a perfluoroalkyl group having 1 to 6 carbon atoms and a polyoxyethylene group or polyoxypropylene group in side chains. Furthermore, the compound which is obtained by reacting a compound having a polyoxyethylene group or polyoxypropylene group with an acrylate compound having a perfluoroalkyl group having 1 to 6 carbon atoms in a side chain may be used. The typical fluorinated surfactant does not include a perfluorooctanoic acid and does not gradually form the perfluorooctanoic acid. Therefore, the typical fluorinated surfactant does not injure the global environment as described in the paragraph 0008.

The resin composition includes 0.1 to 2 mass% of oil-soluble fluorinated surfactant in solid. Including less than 0.1 mass%, the resin composition tends to lower in the stability. Therefore, it is difficult to coat the resin composition, the water-repellency of the microporous film is lowered, and the water pressure resistance and wash resistance of the waterproof and moisture-permeable fabric are lowered. Including more than 2 mass%, the water-repellency of the microporous film is lowered, and the water pressure resistance and wash resistance of the waterproof and moisture-permeable fabric are lowered.

Explanation of the silica fine powders in the resin composition,

The silica fine powders are well-known fine powders consisting of silicon dioxide. The silica fine powders which are 7 to 40 nm of primary particle size may be used. Being more than 40 nm, the water pressure resistance of the microporous film is lowered because a pore size tends to large. As the silica fine powders, it is preferable to use fumed silica fine powders which are amorphous, non-pore and spherical shape in primary particle. Concretely, hydrophilic fumed silica fine powders or hydrophobic fumed silica fine powders may be used; especially hydrophobic fumed silica fine powders may be preferably used. The silica fine powders are sold. For example, as the hydrophilic fumed silica fine powders, AEROSIL 90, AEROSIL 130, AEROSIL 150, AEROSIL 200 or AEROSIL 300 sold by Nippon Aerosil Co., Ltd. may be used. As the hydrophobic fumed silica fine powders, AEROSIL R104, AEROSIL R106, AEROSIL R202, AEROSIL R805, AEROSIL RX200, AEROSIL RX300, AEROSIL R972, AEROSIL R974, AEROSIL R976, AEROSIL R7200, AEROSIL R8200 or AEROSIL R9200 sold by Nippon Aerosil Co., Ltd. may be used. Furthermore, as the silica fine powders, AEROSIL COK84 sold by Nippon Aerosil Co., Ltd. may be used. AEROSIL COK84 is fumed fine powders each of which consists of silica and aluminium oxide.

The resin composition may include 3 to 45 mass%, preferably 10 to 45 mass%, more preferably 15 to 45 mass% of silica fine powders in solid. Including more than 45 mass%, the microporous film tends to lower in the water pressure resistance. Because the microporous film is easily broken as the quantity of the polyurethane resin is about 50 mass%. It is preferable to uniformly disperse and include the silica fine powders in the microporous film. To uniformly disperse the silica fine powders, the polyurethane resin is previously mixed with the silica fine powders with a mixer such as a three rolls mill, a kneaded or sand mill, thereafter the resin composition is prepared.

Explanation of optional components in the resin composition

It is preferable to include a crosslinkable isocyanate compound in the resin composition as the optional component. The polyurethane resin in the microporous film is crosslinked with the crosslinkable isocyanate compound. Therefore, the strength of the microporous film increases, and the adhesion to the body of the fabric increases. The resin composition may preferably include 1 to 10 mass% of crosslinkable isocyanate compound. Including less than 1 mass%, it may be difficult to be increased in the strength of the microporous film or in the adhesion to the body of the fabric. Including mare than 10 mass%, the microporous film tends to be hard.

As the crosslinkable isocyanate compound, tolylene 2,4-diisocyanate, diphenylmethane diisocyanate, isophorone diisocyanate or hexamethylene diisocyanate may be used. Moreover, addition reaction products of triisocyanate from 3 mol of the above-said diisocyanate and 1 mol of the compound having active hydrogen may be used. As the compound having active hydrogen, trimethylolpropane or glycerin may be used. Used blocked isocyanate as the crosslinkable isocyanate compound, it is superior on the stability and pot life of the resin composition. As the blocked isocyanate, it may be preferable used to become free by heating. For example, the blocked isocyanate with phenol, lactam or methylketoxime may be preferably used.

The resin composition may include a resin except the polyurethane resin. The resin is a little included, for example, less than 20 mass% in solid. As the resin, polyacrylic acid, polyvinyl chloride, polystyrene, polybutadiene, polyamino acid or polycarbonate may be used. Furthermore, these polymers which are modified with fluorine or silicon may be used. The resin composition may include a pigment, filler, antimicrobial, deodorant or flame retardant.

Explanation of a solvent in the resin composition

The resin composition includes well-known organic solvent and/or water as a solvent to uniformly solve or disperse the polyurethane, the fluorinated water repellent agent, the oil-soluble fluorinated surfactant and the silica fine powders which are if necessary used. Especially, N,N-dimethylformamide may be preferably used to solve the polyurethane. The resin composition includes about 30 to 85 mass% of solvent.

Explanation of a method for producing the waterproof and moisture-permeable fabric

The waterproof and moisture-permeable fabric is produced with following methods. The resin composition is coated on the surface of the body of the fabric by a method of comma coating or roll on knife coating. Thereafter, being dipped in a coagulating bath, the resin composition is converted into the microporous film. The resin composition is that the polyurethane, the fluorinated water repellent agent and the oil-soluble fluorinated surfactant are solved or dispersed in a polar solvent such as N,N-dimethylformamide or pyrrolidone which is easily replacing water. As the coagulating bath, a water or an aqueous solution containing less than 30 mass%, preferably 5 to 30 mass% of N,N-dimethylformamide. The coagulating temperature may be preferably 5 °C to 35°C , and the coagulating time may be preferably 30 seconds to 5 minutes. After formed the microporous film, it is rinsed at 35°C to 80°C and for 1 to 10 minutes to remove the N,N-dimethylformamide. After rinsed, it is dried at 50°C to 150 °C and for 1 to 10 minutes to obtain the waterproof and moisture-permeable fabric.

The resin composition is coated on the surface of the body of the fabric by a method of comma coating or roll on knife coating. Thereafter, being dried to vapor the organic solvent or the water, the resin composition is converted into microporous film. As the resin composition in the method, the following W/0 emulsion may be used. That is, the W/O emulsion is that polyurethane fine particles having 0.1 to 5 $\mu$ m in size are emulsified and dispersed in a solvent such as methyl ethyl ketone or toluene by a little emulsifier or hydrophilic polyurethane resin.

The resin composition is coated on the surface of the body of the fabric by a method of comma coating or roll on knife coating. Thereafter, being dried to vapor the water, the resin composition is converted into a film. The specified component being eluted from the film, the microporous film is formed. As the resin composition in the method, the following 0/W emulsion may be used. That is, the 0/W emulsion is that the specified component is mixed with the emulsion in which polyurethane fine particles are dispersed in a water by emulsifier or self-emulsified without emulsifier As the specified component, paste, starch or water-soluble polyurethane resin is used which is eluted with warm water of 30 to 100°C. The specified component may be eluted by soaping at warm water of 30 to 100 °C for 5 to 15 minutes with a washing machine or a dyeing machine.

The microporous film may be formed by using the resin composition including a gas bubble agent which is foaming at drying and forming the film. Furthermore, in the case of stably foaming the resin composition with a surfactant or foaming agent, the microporous film may be formed.

The resin composition is coated on the surface of a release material by a method of comma coating or roll on knife coating. Thereafter, being dipped in a coagulating bath, the resin composition is converted into the microporous film. Being released From the release material, the microporous film adheres to the surface of the body of the fabric to obtain the waterproof and moisture-permeable fabric. As the release material, a permeable release fabric is preferably used as dipping in a coagulating bath. A method of adhering is described in the paragraph 0039.

The microporous film is obtained by the above various methods. The thickness of the microporous film is optional, generally 10 to 50 μm. Being thinning, the microporous film tends to lower in the water pressure resistance. Being thickening, the microporous film tends to harden.

Explanation of that a nonporous film optionally was laid on the microporous film

The nonporous film may be laid on the surface of the microporous film. The nonporous film may be inserted between the microporous film and the body of the fabric. The nonporous film is moisture-permeable. In the case of laying the nonporous film, the waterproof and moisture-permeable fabric is superior in the water pressure resistance. As the nonporous film, a polyurethane resin film is used as superiorly adhering to the fine porous film of mainly polyurethane resin. The nonporous film is formed with coating and drying a resin composition for forming the nonporous film on the surface of the microporous film. Furthermore, the nonporous film is formed with coating and drying the resin composition for forming the nonporous film on the surface of a release material, thereafter, the obtained nonporous film is laid on the surface of the microporous film. Furthermore, the nonporous film is formed with coating and drying the resin composition for forming the nonporous film on the surface of a body of the fabric, thereafter, the microporous film is laid on the surface of the nonporous film. As the resin composition for forming the nonporous film, it is generally to solve a polyurethane resin in an organic solvent. As the organic solvent, it is used not to contain N,N,-dimethylformamide or to contain a little N,N-dimethylformamide in the case of directly coating on the surface of the microporous film. Because the N,N-dimethylformamide is solved in the polyurethane of the microporous film if it is much contained. In the case of using the other method, for example coating on the surface of the release material and etc., it is not considerable to contain N,N-dimethylformamide but it is considerable to dry or adhere.

The viscosity of the resin composition of for forming the nonporous film may be preferably 100 to 10000 mPa · s at 25 °C to easily coat.

The resin composition for forming the nonporous film may preferably contain 10 to 30 mass% in solid. The nonporous film is formed with well-known method. For example, the resin composition for forming the nonporous film is coated on the microporous film, the release material or the body with a comma coater, knife coater, reverse coater or gravure roll which is high in mesh and shallow in depth. Thereafter, it is dried to form the nonporous film.

The nonporous film may be preferably 0.5 to 12 μm in thickness. Being less than 0.5 μm, it is difficult to increase the water pressure resistance by using the nonporous film. Being more than 12 μm, it tends to lower in moisture permeability.

Explanation of printing on the microporous film or nonporous film

The optional pattern may be printed on the microporous film or nonporous film of the waterproof and moisture-permeable fabric. The pattern may be printed by coating and drying the composition for printing the pattern on the microporous film or nonporous film with gravure roll, rotary screen or flat screen. The composition for printing the pattern contain a resin and an organic solvent to solve the resin. Furthermore, it may contain a curative agent to cure the resin. As the resin, a polyurethane, acrylic resin, polyester, polyvinyl chloride, polyolefine and/or ethylene-vinyl acetate copolymer may be used. Especially, the polyurethane may be preferably used to adhere to the microporous film or nonporous film because they generally comprise a polyurethane.

The composition for printing the pattern may contain the following optional component. As the optional component, an abrasion resistance or lubricant may be used. As the abrasion resistance or lubricant, a silicone compound such as polydimethylsiloxane, sheet shaped powders consisting of Ne-lauroyl-L-lysine or amorphous fine silica powders having microporous may be used. The sheet shaped powders are used as sliding material. The amorphous fine silica powders are produced by wet process such as gel method or sedimentation method. The other fine powders of heat resistance organic compound or inorganic compound may be used. Furthermore, as the optional component, filler, dye or pigment, antibacterial agent or deodorant may be used. The viscosity of the composition for printing the pattern, is optionally decided, generally 100 to 10000mPa·s at 25 °C.

A figure of the pattern is optional. For example, a lattice, dots, lines, slashes, a check pattern, a pyramid pattern, a hexagonal pattern, a specified name pattern, a trade name pattern or a random pattern may be preferably used to be superior in appearance. An area of the pattern is optional if the moisture permeability of the waterproof and moisture-permeable fabric is much lowered. Generally, the area may be 2 to 50%. Being less than 2%, it tends to lack the appearance even if fine lines are main. Being more than 50%, the moisture permeability tends to lower. The thickness of the pattern may be 0.5 to 10 μm. Being less than 0. 5 μm, it tends to lack the appearance such as contrast feeling or look feeling. Being more than 10 μm, it tends to be easily rubbed and come off.

Explanation of an adhesion of a back fabric and the microporous film or the nonporous film

The back fabric may adhere to the microporous film or nonporous film with an adhesive to easily sew or to prevent a stickiness at a sweat. Then, the body of the fabric is a front fabric. The obtained waterproof and moisture-permeable fabric consists of the following layers. That is the body of the fabric / the microporous film / the adhesive / they back fabric, the body of the fabric / the microporous film / the nonporous film / the adhesive / the back fabric or the body of the fabric / the nonporous film / the microporous film / the adhesive / the back fabric. In the case that the body of the fabric adheres to the microporous film with an adhesive, the adhesive layer exists between the body and the microporous film.

As the back fabric, a same fabric as the body may be used. A textile, knitting or nonwoven fabric consisting of polyamide fiber, polyester fiber and/or cotton which are 15 to 78 decitexes in fineness may be used. Especially, the textile, knitting or nonwoven fabric consisting of polyamide fiber or polyester fiber which is 15 to 44 decitexes in fineness may be preferably used. Because it is easy that a seam tape adheres to sewing part, and the sealing part is superior in water-proof and durability. The seam tape means an adhesive tape which adheres to the seam of the sewing product to water-proof.

The adhesive to adhere to the back fabric is well known. A natural rubber, a synthetic rubber such as nitrile rubber or chloroprene rubber, polyvinyl acetate, acrylic resin, polyamide, polyester, ethylene-vinyl acetate copolymer and/or polyurethane may be used. A curing adhesive may be preferably used to be superior in durability. As the curing adhesive, a crosslinkable polyurethane, polyester, polyamide or ethylene-vinyl acetate copolymer having hydroxyl group, isocyanate group, amino group or carboxyl group may be used. They are self crosslinked and cured or crosslinked and cured with a crosslinking agent such as isocyanate compound or epoxy compound. Especially, the polyurethane may be preferably used as soft and moisture-permeable.

The adhesive may be emulsion, solution or hotmelt. The emulsion or solution may be 500 to 5000 mPa · s in viscosity. They are wholly or partially coated on the surface of the back fabric, microporous film or no pore film with a gravure roll or comma coater. After coated, the back fabric adheres to the microporous film or nonporous film by pressing or heat-pressing with a laminating machine. The hotmelt melts at 80 to 180°C. The melted hotmelt is wholly or partially coated on the surface of the back fabric, microporous film or no pore film. After coated, the back fabric adheres to the microporous film or nonporous film by pressing with a laminating machine when necessary cooling.

The adhesive is wholly or partially applied on the surface, but preferably partially applied to soft or moisture-permeable. The adhesive is preferably partially coated in the dots, lines, check pattern or hexagonal pattern on the whole surface. An area of the coated adhesive may be preferably 10 to 80%. Being less than 10%, the adhesive strength tends to be weak, and the back fabric easily peels off even if thickening the adhesive. Being more than 80%, the adhesive strength increase but the moisture-permeability tends to lower. However, used a moisture-permeable polyurethane adhesive, it is allowable to be more than 80%. The thickness of the coated adhesive depends on the adhesive area or an unevenness of the back fabric, but generally is 5 to 100 μm. Being less than 5 μm, the adhesive strength tends to be weak. Being more than 100 μm, the waterproof and moisture-permeable fabric tends to lower in moisture-permeability and to be hard.

The waterproof and moisture-permeable fabric in the invention consists of the following layers. That is the body of the fabric / the microporous film, the body of the fabric / the microporous film / the nonporous film, the body of the fabric / the nonporous film / the microporous film, the body of the fabric / the microporous film / the pattern, the body of the fabric / the microporous film / the nonporous film / the pattern, the body of the fabric / the nonporous film / the microporous film / the pattern, the body of the fabric / the microporous film / the adhesive / the back fabric, the body of the fabric / the microporous film / the nonporous film / the adhesive / the back fabric or the body of the fabric / the nonporous film / the microporous film / the adhesive / the back fabric. In the case that the body of the fabric adheres to the microporous film with an adhesive, the adhesive layer exists between the body and the microporous film. Additionally, the waterproof and moisture-permeable fabric may be water repellent to increase in water pressure resistance. The water repellent method is basically same as the case of the body of the fabric but the closing method is hardly used.

The waterproof and moisture-permeable fabric is superior in water pressure resistance, moisture-permeability and wash resistance. Therefore, it may be used as the material of clothes such as sports wears and winter wears. Furthermore, it may be used as the material of tents and etc..

Effect of the invention

The waterproof and moisture-permeable fabric comprises of the body of the fabric and the microporous film of mainly polyurethane resin laid on the surface of the body. The microporous film is formed by using the resin composition which includes 1 to 9 mass% of fluorinated water repellent agent and 0.1 to 2 mass% of oil-soluble fluorinated surfactant.

Therefore, the fluorinated water repellent agent uniformly spreads in details of the microporous because the fluorinated water repellent agent and the oil-soluble fluorinated surfactant exist in the microporous film. Repetitively washing, a detergent remains in the microporous. However, the detergent easily removes from the microporous by washing with water because of the oil-soluble fluorinated surfactant. The waterproof and moisture-permeable fabric is superior in original penetration pressure and moisture-permeability. Furthermore, repetitively washing, the waterproof and moisture-permeable fabric is superior in wash resistance because of keeping the original penetration pressure.

Example

The invention is described on the following examples, but is not limited in the following examples. The invention must be interpreted on the following discovery. That is, the waterproof and moisture-permeable fabric is superior in wash resistance when the microporous film is formed by using the resin composition which contains the specified quantity of the fluorinated water repellent agent and the oil-soluble fluorinated surfactant.

Example 1

[Preparation of a body of the fabric]

A plain weave fabric was woven with 115 warps/2.54 cm and 95 wefts/2.54 cm. The warp and the weft consisted of a nylon6 multi-filament which was 78 decitexes/68 filaments. The plain weave fabric was scoured and dyed in 1.0% o.m.f. of acid dye of Kayanol Blue N2G sold by Nippon Kayaku Co., Ltd.. The dyed plain weave fabric was dipped in the following <Recipe 1>, padded at 40% in pick up, dried and heat-treated at 170 °C for 40 seconds. Thereafter, the dyed plain weave fabric was passed at 30m/min. in speed through a pair of calender rolls having a specular roll at 170°C and 300kPa in pressure to obtain a body of the fabric.

<Recipe 1>

| | |
|---|---|
| Emulsion including water repellent agent | 50 parts by mass |
| (NK-GUARD SCH-02 sold by Nicca Chemical Co. , Ltd.; | 20 mass% in solid) |
| Blocked isocyanate | 10 parts by mass |
| (MEIKANEAT WEB sold by Meisei Chemical Works, Co., Ltd.) Isopropyl alcohol | 30 parts by mass |
| Water | 910 parts by mass |

[Preparation of a resin composition for forming a microporous film

It was prepared to be a resin composition for forming a microporous film which was consisted of the following <Recipe 2>. The resin composition was 20 mass% in solid content and 9000 mPa · s/25°C in viscosity. The resin composition contained 3 mass% of the water repellent agent in solid and 0.5 mass% of the oil-soluble fluorinated surfactant in solid.

Recipe 2>

| | |
|---|---|
| Solution including ester-type polyurethane | 100 parts by mass |
| (REZAMINE CU4555 sold by Dainichiseika Color & Chemicals Mfg. Co., Ltd.; 27 mass% in solid content; the solvent was N, N-dimethylformamide.) | |
| Isocyanate compound (crosslinking agent) (REZAMINE X sold by Dainichiseika Color & Chemicals Mfg. Co., Ltd.) | 2 parts by mass |
| Emulsion including fluorinated water repellent agent | 50 parts by mass |
| (NUVA N2114 LIQ sold by Clariant Japan Co., Ltd.; 31 mass% in solid content) | |
| Oil-soluble fluorinated surfactant | 0.15 parts by mass |
| (SURFLON S-386 sold by AGC Seimi Chemical Co., Ltd.) N,N-dimethylformamide | 45 parts by mass |

The <Recipe 2> was prepared with the following method. At first, the oil-soluble fluorinated surfactant was dissolved in the N,N-dimethylformamide, thereafter the emulsion including fluorinated water repellent agent was added, mixed and dispersed. After the other components were mixed, it was stirred vacuum degassing with an agitator to prepare the <Recipe 2>.

[Producing a waterproof and moisture-permeable fabric

The resin composition of the <Recipe 2> was coated on the surface of the body which abetted against the specular roll with a comma coater to be 100g/m$^2$ in coating quantities. After coated, it was dipped in a coagulating bath which was an aqueous solution containing 10 mass% of N,N-dimethylformamide at 20°C to coagulate the resin composition. After coagulated, it was soaped at warm water of 50 °C for 5 minutes and squeezed with a mangle. After squeezed, it was dried at 130°C for 2 minutes to form a microporous film. Thereafter, it was treated at 170 °C for 1 minute to obtain a waterproof and moisture-permeable fabric.

Example 2

A waterproof and moisture-permeable fabric was obtained with the same method as the Example 1 except using the following <Recipe 3> instead of the <Recipe 2>. The <Recipe 3> of a resin composition was 25 mass% in solid content and 10000 mPa · s/25°C in viscosity. The <Recipe 3> contained 4 mass% of the water repellent agent in solid and 0.5 mass% of the oil-soluble fluorinated surfactant in solid.

<Recipe 3>

| | |
|---|---|
| Solution including ester-type polyurethane (REZAMINE CU4836 sold by Dainichiseika Color & Chemicals Mfg. Co., Ltd.; 25 mass% in solid content) | 100 parts by mass |
| Calcium carbonate | 7 parts by mass |
| (NS #400 Sold by Nitto Funka Kogyo Co., Ltd. ) Isocyanate compound (crosslinking agent) | 2 parts by mass |
| (REZAMINE X sold by Dainichiseika Color & Chemicals Mfg. Co., Ltd.) | |
| Colorant of titanium dioxide | 2 parts by mass |
| (DAILACKCOLOUR L-1500 sold by DIC Corporation) | |
| Emulsion including fluorinated water repellent agent | |
| | 5 parts by mass |
| (NUVA N2114 LIQ sold by Clariant Japan Co., Ltd. ; 31 mass% in solid content) | |
| Oil-soluble fluorinated surfactant | 0.2 parts by mass |
| (SURLON S-386 sold by AGC Seimi Chemical Co., Ltd.) N,N-dimethylformamide | 30 parts by mass |

Example 3

[Preparation of a resin composition for forming a microporous film]

It was prepared to be a resin composition for forming a microporous film which was consisted of the following <Recipe 4>. The <Recipe 4> was 31 mass% in solid content and 8000 mPa · s/25 °C in viscosity. The recipe 4> contained 5 mass% of the water repellent agent in solid and 1.2 mass% of the oil-soluble fluorinated surfactant.

<Recipe 4>

| | |
|---|---|
| Aqueous emulsion including polycarbonate-polyurethane | 75 parts by mass |
| (PARASOL PNA-120 sold by 0hara Paragium Chemical Co. , Ltd. ; 30 mass% in solid content) | |
| Water-soluble polyurethane | 25 parts by mass |
| (PARAMILLION AF-50 sold by 0hara Paragium Chemical Co., Ltd..; 50 mass% in solid content) | |
| Blocked isocyanate (PARACAT PGW-4 sold by 0hara Paragium Chemical Co., Ltd.) | 5 parts by mass |

(continued)

Emulsion including fluorinated water repellent agent

| | 7 parts by mass |
|---|---|

(NUVA N2114 LIQ sold by Clariant Japan Co., Ltd. ; 31 mass% in solid content)

| Oil-soluble fluorinated surfactant | 0.5 parts by mass |
|---|---|

(SURFLON S-386 sold by AGC Seimi Chemical Co., Ltd.)

| Isopropyl alcohol | 20 parts by mass |
| Water | 20 parts by mass |

The <Recipe 4> was prepared with the following method. A solution dissolving the oil-soluble fluorinated surfactant in the isopropyl alcohol was mixed with a dispersion dispersing the emulsion including fluorinated water repellent agent in 10 parts by mass of the water. A solution mixing PARAMILLION AF-50 with 10 parts by mass of the water, the PARACAT PGW-4 and PARASOL PNA-120 were added in the above mixture. Thereafter, it was stirred vacuum degassing with an agitator to prepare the (Recipe 4>.

[Producing a waterproof and moisture-permeable fabric]

The resin composition of the <Recipe 4> was coated on the surface of the body which abutted against the specular roll with a comma coater to be 100g/m$^2$ in coating quantity. The body was the body of the fabric which was used in the Example 1. After coated, it was dried at 120°C for 3 minutes. Thereafter, it was treated at 170°C for 2 minutes. After treated, it was soaped at 60°C by using a household washing machine to elute the water-soluble polyurethane (PARAMILLION AF-50). After soaped, it was rinsed and dried at 60°C for 20 minutes with a tumbler to obtain a waterproof and moisture-permeable fabric. A microporous film of the waterproof and moisture-permeable fabric contained 7 mass% of the water repellent agent in solid and 1.7 mass% of the oil-soluble fluorinated surfactant in solid because the water-soluble polyurethane has been eluted.

Example 4

[Preparation of a resin composition for forming a nonporous film]

It was prepared to be a resin composition for forming a nonporous film which was consisted of the following <Recipe 5>. The <Recipe 5> was 20 mass% in solid content and 8000 mPa · s/25°C in viscosity.

<Recipe 5>

| Polyeterpolyurethane | 100 parts by mass |
|---|---|

(HIMULEN Y128NS sold by Dainichiseika Color & Chemicals Mfg. Co., Ltd. ; 25 mass% in solid content)

| Isocyanate compound (CORONATE HX sold by Nippon Polyurethane Industry Co., Ltd.) | 2 parts by mass |
| Emulsion including water repellent agent | 2 parts by mass |

(NUVA N2114 LIQ sold by Clariant Japan Co., Ltd. ; 31 mass% in solid content)

| Fluorinated surfactant (SURFLON S-386 sold by AGC Seimi Chemical Co., Ltd.) | 0.3 parts by mass |
| Toluene | 30 parts by mass |
| Water | 5 parts by mass |

The <Recipe 5> was prepared with the following method. At first, the fluorinated surfactant was dissolved in the toluene. Thereafter, the HIMULEN Y128NS and CORONATE HX were added and mixed. After mixed, a mixture of the water and the NUVA N2114 LIQ is added stirring with an agitator to prepare the <recipe 5>.

[Preparation of a resin composition for forming a microporous film]

It was prepared to be a resin composition for forming a microporous film which was consisted of the following <Recipe 6>. The <Recipe 6> was 18 mass% in solid content and 4000 mPa · s/25 °C in viscosity. The <Recipe 6> contained 5 mass% of the water repellent agent in solid and 0.9 mass% of the dissoluble fluorinated surfactant in solid.

<Recipe 6>

| Polyurethane solution | 100 parts by mass |
|---|---|
| (HIMULEN X-3040 sold by Dainichiseika CoLor & Chemicals Mfg. Co., Ltd. ; 30 mass% in solid content) | |
| Emulsion including fluorinated water repellent agent | 5 parts by mass |
| (NUVA N21.14 LIQ sold by Clariant Japan Co., Ltd.; 31 mass% in solid content) | |
| Oil-soluble fluorinated surfactant (SURFLON S-386 sold by AGC Seimi Chemical Co. , Ltd.) | 0.3 parts by mass |
| Isocyanate compound (crosslinking agent) | 2 parts by mass |
| (REZAMINE X sold by Dainichiseika Color & Chemicals Mfg. Co., Ltd.) | |
| Methylethylketone | 20 parts by mass |
| Toluene | 20 parts by mass |
| Water | 40 parts by mass |

The <Recipe 6> was prepared with the following method. At first, the oil-soluble fluorinated surfactant was dissolved in a mixture of the methylethylketone and toluene. Thereafter, the HIMULEN X-3040 and REZAMINE X were mixed with the above solution, After mixed, a dispersion of the water and emulsion including fluorinated water repellent agent were slowly added stirring with an agitator to prepare the <Recipe 6>. The <Recipe 6> was W/0 emulsion.

[Producing a waterproof and moisture-permeable fabric]

The resin composition of the <Recipe 5> was coated on the surface of the body which abutted against the specular roll with a comma coater to be 15g/m$^2$ in coating quantity. The body was the body of the fabric which was used in the Example 1. After coated, it was dried at 120 °C for 2 minutes to form a nonporous film on the surface of the body. The resin composition of the <Recipe 6> was coated on the surface of the nonporous film with a comma coater to be 100g/m$^2$ in coating quantity. Thereafter, it was dried at 130°C for 2 minutes and treated at 170 °C for 1 minute to obtain a waterproof and moisture-permeable fabric. The waterproof and moisture-permeable fabric had a microporous film on the nonporous film.

Example 5

[Preparation of a resin composition for forming a nonporous film]

It was prepared to be a resin composition for forming a nonporous film which was consisted of the following <Recipe 7>. The <Recipe 7> was 16 mass% in solid content and 3000 mPa · s/25°C in viscosity.

<Recipe 7>

| Non-yellowing polyurethane | 50 parts by mass |
|---|---|
| (LUCKSKIN U2524 sold by Seikoh Chemicals Co. , Ltd.:25 mass% in solid content) | |
| Mat agent for the non-yellowing polyurethane | 50 parts by mass |
| (LUCKSKIN U2525M sold by Seikoh Chemicals Co., Ltd..; 20 mass% in solid content) | |
| Isopropyl alcohol | 20 parts by mass |
| Toluene | 20 parts by mass |

[Producing a waterproof and moisture-permeable fabric]

The resin composition of the <Recipe 7> was coated on the surface of the microporous film of the waterproof and moisture-permeable fabric which was obtained by the Example 2 with a knife coater to be 20g/m$^2$ in coating quantity. After it was dried at 120 °C for 2 minutes, a nonporous film having 3 μ m in thickness was formed on the surface of the microporous film to obtain a waterproof and moisture-permeable fabric.

Example 6

[Preparation of a composition for printing a pattern]

It was prepared to be a composition for printing a pattern which was consisted of the following <Recipe 8>. The <Recipe 8> was 100 mPa · s/25°C in viscosity.

<Recipe 8>

[Composition A for printing the pattern

| | |
|---|---|
| Gravure ink of polyurethane | 100 parts by mass |
| (XGL-010 GRAY sold by Sakata Ink Corporation) | |
| Curative agent for gravure ink | 3 parts by mass |
| Toluene/Methylethylketone (1/1) | 50 parts by mass |

[Producing a waterproof and moisture-permeable fabric]

The resin composition of the <Recipe 8> was coated on the surface of the microporous film of the waterproof and moisture-permeable fabric which was obtained by the Example 2 with a gravure roll to be 6g/m$^2$ in coating quantity. A lattice shape was engraved on the gravure roll.
The lattice shape was 38 μm in depth and 45% in area. After it was dried at 120 °C for 30 seconds, a lattice pattern was formed on the microporous film. Thereafter, it was treated at 170°C for 1 minute to obtain a waterproof and moisture-permeable fabric having the lattice pattern.

Example 7

The <Recipe 8> was coated on the surface of the nonporous film of the waterproof and moisture-permeable fabric which was obtained by the Example 5 with the same method as the Example 6 to a waterproof and moisture-permeable fabric having the lattice pattern.

Example 8

A waterproof and moisture-permeable fabric was obtained with the same method as the Example 2 except using a fluorinated surfactant of SURFLON S-651 sold by AGC Seimi Chemical Co., Ltd. instead of the SURFLON S-386 sold by AGC Seimi Chemical Co., Ltd. in the <Recipe 3>. The SURFLON S-386 was oil-soluble and water-soluble, and the SURFLON S-651 was oil-soluble but not water-soluble.

Example 9

[Preparation of a back fabric]

A toricot fabric was knitted with 28 gages by using 22 decitexes/7 filaments of nylon. The toricot fabric was scoured to prepare a back fabric.

[Producing a waterproof and moisture-permeable fabric]

A moisture curing polyurethane hot-melt adhesive of TAKEMELT MA3229 sold by Mitsui-Takeda Chemicals Co., Ltd. was coated on the microporous film of the waterproof and moisture-permeable fabric which was obtained by the Example 2 with a gravure roll engraving dots at 20 meshes to be 10g/m$^2$ in coating quantity. The back fabric was laid on the hot-melt adhesive and pressed at 300 kPa to obtain a waterproof and moisture-permeable fabric having the back fabric.

Example 10

The above back fabric was laid on the surface of the nonporous film of the waterproof and moisture-permeable fabric which was obtained by the Example 5 with the same method as the Example 9 to obtain a waterproof and moisture-permeable fabric having the back fabric.

Comparative Example 1

A waterproof and moisture-permeable fabric was obtained with the same method as the Example 1 except that the fluorinated water repellent agent and oil-soluble fLuorinated surfactant were not used in the <Recipe 2>.

Comparative Example 2

A waterproof and moisture-permeable fabric was obtained with the same method as the Example 2 except that the fluorinated water repellent agent and oil-soluble fluorinated surfactant were not used in the <Recipe 3>.

Comparative Example 3

A waterproof and moisture-permeable fabric was obtained with the same method as the Example 3 except that the fluorinated water repellent agent and oil-soluble fluorinated surfactant were not used in the <Recipe 4>.

Comparative Example 4

A waterproof and moisture-permeable fabric was obtained with the same method as the Example 4 except that the water repellent agent and fluorinated surfactant were not used in the <Recipe 5>, and the fluorinated water repellent agent and oil-soluble fluorinated surfactant were not used in the <Recipe 6>.

Comparative Example 5

A waterproof and moisture-permeable fabric was obtained with the same method as the Example 2 except that the fluorinated water repellent agent was not used in the <Recipe 3>.

Comparative Example 6

A waterproof and moisture-permeable fabric was obtained with the same method as the Example 2 except that the oil-soluble fluorinated. surfactant was not used in the <Recipe 3>.

Comparative Example 7

A waterproof and moisture-permeable fabric was obtained with the same method as the Example 2 except that 20 parts by mass of the emulsion including the fluorinated water repellent agent was used in the <Recipe 3>. The changed <Recipe 3> contained 15 mass% of the water repellent agent in solid and 0.5 mass% of the oil-soluble fluorinated surfactant in solid.

Comparative Example 8

A waterproof and moisture-permeable fabric was obtained with the same method as the Example 2 except that 1 part by mass of the oil-soluble fluorinated surfactant was used in the <Recipe 3>. The changed <Recipe 3> contained 4 mass% of the water repellent agent in solid and 2.6 mass% of the oil-soluble fluorinated surfactant in solid.

Comparative Example 9

A waterproof and moisture-permeable fabric was obtained with the same method as the Example 2 except using a fluorinated surfactant of SURFLON S-241 sold by AGC Seimi Chemical Co., Ltd. instead of the SURPLON S-386 sold by AGC Seimi Chemical Co., Ltd. in the <Recipe 8>. The SURFLON S-386 was oil-soluble and water-soluble, and the SURFLON S-241 was water-soluble but not oil-soluble.

Comparative Example 10

A waterproof and moisture-permeable fabric was obtained with the same method as the Example 2 except using a fluorinated surfactant of SURFLON S-420 sold by AGC Seimi Chemical Co., Ltd. instead of the SURPLON S-386 sold by AGC Seimi Chemical Co., Ltd. in the <Recipe 3>, The SURFLON S-386 was oil-soluble and water-soluble, and the SURFLN S-420 was not water-soluble and oil-soluble.

A water pressure resistance (kPa), wash resistance (%) and moisture permeability (g/m$^2 \cdot$ 24hrs) were measured with the following method about the waterproof and moisture-permeable fabrics of the Examples 1-10 and Comparative Examples 1-10. The results were shown in Table 1.

(1) Water pressure resistance (kPa)

The water pressure resistance was measured on the basis of the method of high water pressure described in JIS L-1092. In the method, the body of the fabric was set upper side though generally set down side. Set down side, a microporous film might partially burst as a water might partially enter between the body and the microporous film at high water pressure. Bursting, the substantial water pressure resistance was not measured.

(2) Wash resistance (%)

The waterproof and moisture-permeable fabrics were repetitively washed for 100 times on the basis of 103 method described in JIS L-0217. After repetitively washed, a water pressure resistance (B) was measured with the above method. The wash resistance was calculated with the following formula, using the water pressure resistance (B) and the original water pressure resistance (A).

$$\text{Wash resistance} = [(B)/(A)] \times 100$$

(3) Moisture permeability (g/m$^2$. 24hrs)

The moisture permeability was measured on the basis of the A-1 method (calcium chloride method) described in JTS L-1099.

[Table1]

| | Water pressure resistance | | Wash resistance | Moisture permeability |
|---|---|---|---|---|
| | Original | after 100 washing | | |
| Ex. 1 | 80 | 60 | 75 | 9289 |
| Ex. 2 | 104 | 79 | 76 | 10126 |
| Ex. 3 | 36 | 26 | 72 | 10124 |
| Ex. 4 | 42 | 32 | 76 | 9489 |
| Ex-5 | 182 | 142 | 78 | 8123 |
| Ex. 6 | 110 | 78 | 71 | 9624 |
| Ex. 7 | 184 | 143 | 78 | 7722 |
| Ex. 8 | 95 | 71 | 75 | 10350 |
| Ex. 9 | 125 | 98 | 78 | 9113 |
| Ex. 10 | 202 | 161 | 80 | 7312 |
| Com. Ex. 1. | 83 | 50 | 60 | 8521 |
| Com. Ex. 2 | 105 | 41 | 39 | 9632 |
| Com. Ex. 3 | 14 | 7 | 50 | 10223 |
| Com. Ex. 4 | 35 | 17 | 49 | 9276 |
| Com. Ex. 5 | 78 | 31 | 40 | 9987 |
| Com. Ex. 6 | 68 | 42 | 62 | 9763 |
| Com. Ex. 7 | 63 | 37 | 59 | 10539 |

(continued)

| | Water pressure resistance | | Wash resistance | Moisture permeability |
|---|---|---|---|---|
| | Original | after 100 washing | | |
| Com. Ex. 8 | 57 | 23 | 40 | 10368 |
| Com. Ex. 9 | 78 | 39 | 50 | 10235 |
| Com. Ex. 10 | 84 | 43 | 51 | 10249 |

The waterproof and moisture-permeable fabrics of the Examples were superior in the wash resistance than the Comparative Examples. The waterproof and moisture-permeable fabrics of the Comparative Examples 1-4 were inferior in the wash resistance because not containing the fluorinated water repellent agents and the oil-soluble fluorinated surfactants in the microporous films. The waterproof and moisture-permeable fabric of the Comparative Example 5 was inferior in the wash resistance because not containing the fluorinated water repellent agent in the microporous film. The waterproof and moisture-permeable fabric of the Comparative Example 6 was inferior in the wash resistance because not containing the oil-soluble fluorinated surfactant in the microporous film. The waterproof and moisture-permeable fabric of the Comparative Example 7 was inferior in the wash resistance because excessively containing the fluorinated water repellent agent in the microporous film. In the case of excessively containing, the microporous film was inferior in the wash resistance as it was not uniformly formed. The waterproof and moisture-permeable fabric of the Comparative Example 8 was inferior in the wash resistance because excessively containing the oil-soluble fluorinated surfactant. In the case of excessively containing, the microporous film was inferior in the wash resistance as it kept a detergent. The waterproof and moisture-permeable fabric of the Comparative Example 9 was inferior in the wash resistance because washing away the water- soluble fluorinated surfactant. The waterproof and moisture-permeable fabric of the Comparative Example 10 was inferior in the wash resistance because keeping a detergent with the fluorinated surfactant which was not oil-soluble and water- soluble. That is, existing the specified fluorinated water repellent agent and oil-soluble fluorinated surfactant in the microporous film, the waterproof and moisture-permeable fabric was superior in the wash resistance.

Example 11

[Preparation of a release fabric]

A plain weave fabric was woven with 120 warp/2.54 cm and 90 wefts/2.54 cm. The warp and weft consisted of a polyester multi-filament which was 83 decitexes/48 filaments. The plain weave fabric was scoured, dipped in the following <Recipe 11>, padded at 40% in pick up, dried and heat-treated at 170 °C for 40 seconds. Thereafter, the plain weave fabric was passed at 30m/min. in speed through a pair of calender rolls having a specular roll at 150 °C and 300kPa in pressure to obtain a release fabric.

<Recipe 11>

| | |
|---|---|
| Emulsion including fluorinated water repellent agent (ASAHIGUARD 970 sold by Asahi Glass Co., Ltd. | 120 parts by mass |
| Triazine compound (SUMITEX RESIN M-3 sold by Sumika Chemtex Co., Ltd.) | 5 parts by mass |
| Catalyst of organic amine salt (SUMITEX ACCELERATOR ACX sold by Sumika Chemtex Co., Ltd.) | 5 parts by mass |
| Isopropyl alcohol | 30 parts by mass |
| Water | 840 parts by mass |

[Preparation of a resin composition for forming a microporous film]

The <recipe 2> in the Example 1 was prepared.

[Producing a microporous film]

The <Recipe 2> was coated on the surface of the release fabric which abutted against the specular roll with a comma coater to be 100g/m 2 in coating quantity. After coated, it was dipped in a coagulating bath which was an aqueous solution containing 15 mass% of N,N-dimethylformamide for 2 minutes at 20 °C to coagulate the <Recipe 2>. After coagulated, it was soaped at warm water of 50 °C for 5 minutes and squeezed with a mangle. After squeezed, it was dried at 130 °C for 2 minutes to form a microporous film on the release fabric. Thereafter, it was treated at 170 °C for 1 minute. After treated, the microporous film was released from the release fabric.

[Preparation of a body of a fabric]

A plain weave fabric was woven with 120 warps/2.54 cm and 65 wefts/2.54 cm. The warp consisted of a nylon multi-filament which was 78 decitexes/68 filaments and the weft consisted of two multi-filament each of which was 78 decitexes/68 filaments. The plain weave fabric was scoured and dyed in 1.0% o. m. f. of acid dye of Kayanol Blue N2G sold by Nippon Kayaku Co., Ltd.. The dyed plain weave fabric was dipped in the above <Recipe 1>, padded at 40% in pick up, dried and heat-treated at 170°C for 40 seconds to obtain a body of a fabric.

[Producing a waterproof and moisture-permeable fabric]

A moisture curing polyurethane hot-melt adhesive of TAKEMELT MA3229 sold by Mitsui-Takeda Chemicals Co., Ltd.. was coated on the surface of the body with a gravure roll engraving dots at 20 meshes to be 10g/m$^2$ in coating quantity. Then coated, the hot-melt adhesive melted at 120 °C. The microporous film was laid on the hot-melt adhesive and pressed at 300 kPa to obtain a waterproof and moisture-permeable fabric which consisted of the body of the fabric / the adhesive / the microporous film.

Example 12

[Preparation of a resin composition for forming a microporous film]

A resin solution a was prepared the following method. That is, 40 parts by mass of polyesterpolyurethane solution (LUCKSKIN UJ8517 sold by Seikoh Chemicals Co., Ltd.; 25 mass% in solid content; a solvent was N, N-dimethylformamide.), 3 parts by mass of fine silica powders (AEKOSIL NX90G sold by Nippon Aerosil Co., Ltd. ; an average particle size was 20 $\mu$m.) and 7 parts by mass of N,N-dimethylformamide were mixed, roughly kneaded and uniformly kneaded with a three rolls mill.
Another resin solution was prepared the following method. That is, 0.15 parts by mass of oil-soluble and water-soluble fluorinated surfactant (SURFLON S-386 sold by AGC Seimi Chemical Co., Ltd.) was dissolved in 30 parts by mass of N, N-dimethylformamide, thereafter 5 parts by mass of fluorinated water repellent agent (NUVA N2114 LIQ sold by Clariant Japan Co., Ltd.) was mixed and dispersed in that. A resin composition for forming a microporous film was prepared by mixing the following <Recipe 12> and stirring it vacuum degassing with an agitator. The resin composition was 21 mass% in solid content and 10000 mPa · s/25°C in viscosity. The resin composition contained 6 mass% of the fluorinated water repellent agent in solid, 0.5 mass% of the oil-soluble and water-soluble fluorinated surfactant in solid and 11 mass% of the fine silica powders in solid.

<Recipe 12>

| | |
|---|---|
| Polyesterpolyurethane solution | 50 parts by mass |
| (LUCKSKIN UJ8517 sold by Seikoh Chemicals Co., Ltd.; 25 mass% in solid content) | |
| The resin solution $\alpha$ | 50 parts by mass |
| The resin solution $\beta$ | 35.15 parts by mass |
| Isocyanate compound | 1 parts by mass |
| (REZAMINE X sold by Dainichiseika Color & Chemicals Mfg. Co., Ltd.) | |

[Producing a waterproof and moisture-permeable fabric

A waterproof and moisture-permeable fabric was obtained with the same method as the Example 11 except using the recipe 12> instead of the <Recipe 12>.

Example 13

[Preparation of a resin composition for formin a microporous film]

A resin solution α was prepared the following method. That is, 30 parts by mass of polyesterpolyurethane solution (LUCKSKIN UJ8517 sold by Seikoh Chemicals Co., Lid.; 25 mass% in solid content; a solvent was N,N-dimethylformamide.), 10 parts by mass of fumed fine silica powders (AEROSIL R974 sold by Nippon Aerosil Co., Ltd.; an average particle size was 12 μ m.) and 10 parts by mass of N, N-dimethylformamide were mixed, roughly kneaded and uniformly kneaded with a three rolls mill. Another resin solution was prepared the following method. That is, 0.1 parts by mass of oil-soluble and water-soluble fluorinated surfactant (SURFLON S-386 sold by AGC Seimi Chemical Co., Ltd.) was dissolved in 3b parts by mass of N,N-dimethylformamide, thereafter 5 parts by mass of fluorinated water repellent agent (NUVA N2114 LIQ sold by Clariant Japan Co., Ltd.) was mixed and dispersed in that. A resin composition for forming a microporous film was prepared by mixing the folloving <Recipe 13> and stirring it vacuum degassing with an agitator. The resin composition was 23 mass% in solid content and 10000 mPa · s/25°C in viscosity. The resin composition contained 5 mass% of the fluorinated water repellent agent in solid, 0.3 mass% of the oil-soluble and water-soluble fluorinated surfactant in solid and 30 mass% of the fumed fine silica powders in solid.

<Recipe 13>

| | |
|---|---|
| Polyesterpolyurethane solution | 50 parts by mass |
| (LUCKSKIN UJ8517 sold by Seikoh Chemicals Co., Ltd.; 25 mass% in solid content) | |
| The resin solution α | 50 parts by mass |
| The resin solution β | 40.1 parts by mass |
| Isocyanate compound | 1.5 parts by mass |
| (REZAMINE X sold by Dainichiseika Color & Chemicals Mfg. Co., Ltd.) | |

[Producing a waterproof and moisture-permeable fabric]

A waterproof and moisture-permeable fabric was obtained with the same method as the Example 11 except using the <Recipe 13> instead of the <Recipe 12>.

Example 14

[Preparation of a composition for printing a pattern]

The <Recipe 8> of the composition A for printing the pattern in the Example 6 was prepared.

[Producing a waterproof and moisture-permeable fabric]

The <Recipe 8> was coated on the surface of the microporous film of the waterproof and moisture-permeable fabric which was obtained by the Example 13 with a gravure roll to be 6g/m$^2$ in coating quantity. A lattice shape was engraved on the gravure roll. The lattice shape was 38 μ m in depth and 45% in area. After it was dried at 120 °C for 30 seconds, a lattice pattern was formed on the microporous film. Thereafter, it was treated at 170°C for 1 minute to obtain a waterproof and moisture-permeable fabric having the lattice pattern. The waterproof and moisture-permeable fabric consisted of the body of the fabric / the adhesive / the microporous film / the pattern.

Example 15

[Preparation of a resin composition for forming a nonporous film

It was prepared, to be a resin composition for forming a nonporous film which was consisted of the following <Recipe 14>. The <Recipe 14> was 17 mass% in solid content and 2500 mPa·s/25°C in viscosity.

<Recipe 14>

| | |
|---|---|
| Polyeterpolyurethane | 100 parts by mass |
| (HIMULEN Y-611-124 sold by Dainichiseika Color & Chemicals Mfg. Co., Ltd.; 25 mass% in solid content) | |
| N,N-dimethylformamide | 25 parts by mass |
| Toluene | 25 parts by mass |

[Producing a waterproof and moisture-permeable fabric

The <Recipe 14> was coated on the release surface of the release paper (130TPD sold by Lintec Corporation) with a comma coater to be 40g/m$^2$ in coating quantity. After coated, it was dried at 120°C for 2 minutes to form a nonporous film which was about 7 $\mu$m in thickness. Thereafter, the nonporous film was promptly laid on the microporous film of the waterproof and moisture-permeable fabric obtained in the Example 13. After laid, they were adhered at 120 °C and 400kPa to obtain a waterproof and moisture-permeable fabric which consisted of the body of the fabric / the adhesive / the microporous film / the nonporous film.

Example 16

[Producing a waterproof and moisture-permeable fabric]

The <Recipe 8> of the composition A for printing the pattern in the Example 14 was coated on the nonporous film of the waterproof and moisture-permeable fabric of the Example 15 with same method as the Example 14 to obtain a waterproof and moisture-permeable fabric which consisted of the body of the fabric / the adhesive / the microporous film / the nonporous film / the pattern.

Example 17

[Preparation of a back fabric]

A tricot fabric was knitted with 28 gages by using 22 decitexes/7 filaments of nylon, The tricot fabric was scoured to prepare a back fabric.

[Producing a waterproof and moisture-permeable fabric

The back fabric was adhered to the microporous film of the waterproof and moisture-permeable fabric of the Example 13 with the same method as the body was adhered to the microporous film in the Example 13 to obtain a waterproof and moisture-permeable fabric which consisted of the body of the fabric / the adhesive / the microporous film / the adhesive / the back fabric.

Example 18

[Producing a waterproof and moisture-permeable fabric]

The back fabric in the Example 17 was adhered to the nonporous film of the waterproof and moisture-permeable fabric of the Example 15 with the same method as the body was adhered to the microporous film in the Example 13 to obtain a waterproof and moisture-permeable fabric which consisted of the body of the fabric / the adhesive / the microporous film / the nonporous film / the adhesive / the back fabric.

Comparative Example 11

A waterproof and moisture-permeable fabric was obtained with the same method as the Example 11 except that the fluorinated water repellent agent was not used in the <Recipe 2>.

Comparative Example 12

A waterproof and moisture-permeable fabric was obtained with the same method as the Example 11 except that the oil-soiuble fluorinated surfactant was not used in the <Recipe 2>.

Comparative Example 13

A waterproof and moisture-permeable fabric was obtained with the same method as the Example 12 except using the following <Recipe 15> instead of the <Recipe 12>. The <Recipe 15> did not contain the fluorinated water repellent agent, oil-soluble and water-soluble fluorinated surfactant and fine silica powders of NX90G. The <Recipe 15> was 20 mass% in solid content and 11000 mPa · s/25°C in viscosity.

<Recipe 15>

| | |
|---|---|
| Polyesterpolyurethane solution | 100 parts by mass |
| (LUCKSKIN UJ8517 sold by Seikoh Chemicals Co., Ltd.; 25 mass% in solid content) | |
| Isocyanate compound | 1 part by mass |
| (REZAMINE X sold by Dainichiseika Color Chemicals Mfg.. Co., Ltd.) | |
| N,N-dimethylformamide | 30 parts by mass |

Comparative Example 14

A resin composition was prepared by increasing 13 parts by mass of the fluorinated water repellent agent in solid and using 48.2 parts by mass of the resin solution β in the <Recipe 13>. The resin composition was 24 mass% in solid content and 16000 mPa · s/25°C in viscosity. The resin composition contained 11 mass% of the fluorinated water repellent agent in solid, 0.3 mass% of the oil-soluble and water-soluble fluorinated surfactant in solid and 28 mass% of the fumed fine silica powders in solid. A waterproof and moisture-permeable fabric was obtained with the same method as the Example 13 except using the resin composition instead of the <Recipe 13>.

Comparative Example 15

A resin composition was prepared by increasing 0.8 parts by mass of the fluorinated surfactant in solid and using 40.8 parts by mass of the resin solution β in the <Recipe 13>. The resin composition was 23 mass% in solid content and 9000 mPa · s/25°C in viscosity. The resin composition contained 5 mass% of the fluorinated water repellent agent in solid, 2.4 mass% of the oil-soluble and water-soluble fluorinated surfactant in solid and 30 mass% of the fumed fine silica powders. A waterproof and moisture-permeable fabric was obtained with the same method as the Example 13 except using the resin composition instead of the <Recipe 13>.

Comparative Example 16

A resin composition was prepared in the <Recipe 13) except using the fluorinated surfactant of SURFLON S-241 which was water-soluble but not oil-soluble instead of the oil-soluble and water-soluble fluorinated surfactant of SURFLON S-386. A waterproof and moisture-permeable fabric was obtained with the same method as the Example 13 except using the resin composition instead of the <Recipe 13>.

Comparative Example 17

A resin composition was prepared in the <Recipe 13> except using the fluorinated surfactant of SURFLON S-420 which was not water-soluble and oil-soluble instead of the oil-soluble and water-soluble fluorinated surfactant of SURFLON S-386. A waterproof and moisture-permeable fabric was obtained with the same method as the Example 13 except using the resin composition instead of the <Recipe 13>.

A water pressure resistance (kPa), wash resistance (%) and moisture permeability (g/m$^2$ · 24hrs) were measured with the above method about the waterproof and moisture-permeable fabrics of the Examples 11-18 and Comparative Examples 11-17. The results were shown in Table 2.

[Table 2]

| | Water pressure resistance | | | |
| --- | --- | --- | --- | --- |
| | Original | after 100 washing | Wash resistance | Moisture permeability |
| Ex. 11 | 102 | 79 | 77 | 8360 |
| Ex. 12 | 133 | 100 | 75 | 7624 |
| Ex.13 | 225 | 169 | 75 | 10185 |
| Ex.14 | 230 | 176 | 77 | 9886 |
| Ex. 15 | 415 | 335 | 81 | 7639 |
| Ex.16 | 433 | 360 | 83 | 7487 |
| Ex. 17 | 240 | 187 | 78 | 9167 |
| Ex. 18 | 452 | 371 | 82 | 6927 |
| Com. Ex. 11 | 86 | 40 | 47 | 8072 |
| Com. Ex. 12 | 53 | 20 | 38 | 8585 |
| Com. Ex. 13 | 136 | 98 | 72 | 2889 |
| Com. Ex. 14 | 105 | 51 | 49 | 10360 |
| Com. Ex. 15 | 120 | 58 | 48 | 10385 |
| Com. Ex. 16 | 96 | 51 | 53 | 10010 |
| Com. Ex. 17 | 130 | 56 | 43 | 10274 |

The waterproof and moisture-permeable fabrics of the Examples 11-18 were superior in the wash resistance than the Comparative Examples 11, 12 and 14-17. The waterproof and moisture-permeable fabric of the Comparative Example 1 was inferior in the wash resistance because not containing the fluorinated water repellent agent in the microporous film. The waterproof and moisture-permeable fabric of the Comparative Example 12 was inferior in the wash resistance because not containing the oil-soluble and water-soluble fluorinated surfactant and being uneven when the microporous film was formed. The waterproof and moisture-permeable fabric of the Comparative Example 14 was inferior in the wash resistance because excessively containing the fluorinated water repellent agent and being uneven when the microporous film was formed. The waterproof and moisture-permeable fabric of the Comparative Example 15 was inferior in the wash resistance because excessively containing the oil-soluble fluorinated surfactant. In the case of excessively containing, the microporous film was inferior in the wash resistance as it kept a detergent. The waterproof and moisture-permeable fabric of the Comparative Example 16 was inferior in the wash resistance because washing away the fluorinated surfactant which is water-soluble but not oil-soluble. The waterproof and moisture-permeable fabric of the Comparative Example 17 was inferior in the wash resistance because keeping a detergent with the fluorinated surfactant which was not oil-soluble and water- soluble. That is, existing the specified fluorinated water repellent agent and oil-soluble fluorinated surfactant in the microporous film, the waterproof and moisture-permeable fabric was superior in the wash resistance. In the case of the Comparative Example 13, the microporous film was formed by using only polyurethane without the fluorinated water repellent agent and etc.. Therefore, it was superior in the wash resistance but greatly inferior in the moisture permeability. In the case of the Example 12, it was superior in the moisture permeability because the fine silica powders were uniformly dispersed and it was same wash resistance as the Comparative Example 13 because of adding the fluorinated water repellent agent and the oil-soluble and water-soluble fluorinated surfactant.

Example 31

[Preparation of a body of a fabric]

A plain weave fabric was woven with 115 warps/2.54 cm and 95 wefts/2.54 cm. The warp and weft consisted of a nylon6 multi-filament which was 78 decitexes/68 filaments. The plain weave fabric was scoured and dyed in 1.0% o.m.f. of acid dye of Kayanol Blue N2G sold by Nippon Kayaku Co., Ltd., The dyed plain weave fabric was dipped in an emulsion including 5 mass% of fluorinated water repellent agent (ASAHIGUARD GS10 sold by Asahi Glass Co., Ltd.), padded at 40% in pick up, dried and heat-treated at 170 °C for 40 seconds. Thereafter, the fabric was passed at 30m/min. in speed through a pair of calender rolls having a specular roll at 170°C and 300kPa in pressure to obtain a body of a fabric.

[Preparation of a resin composition for forming a microporous film]

A transparent and colorless resin solutionA was prepared the following method. That is, 30 parts by mass of polyesterpolyurethane solution (LUCKSKIN 1740-29B sold by Seikoh Chemicals Co., Ltd.; 28 mass% in solid content; a solvent was N,N-dimethylformamide), 10 parts by mass of fumed hydrophobic fine silica powders (AEROSIL R-972 sold by Nippon Aerosil Co., Ltd.; an average particle size was 12 nm; adsorbing N,N-dimethylformamide at 260 ml/100g) and 10 parts by mass of N, N-dimethylformamide were mixed, roughly kneaded and uniformly kneaded with a three rolls mill.

Another resin solutionB was prepared the following method. That is, 0.2 parts by mass of oil-soluble and water-soluble fluorinated surfactant (SURFLON S-386 sold by AGC Seimi Chemical Co., Ltd.) was dissolved in 40 parts by mass of N, N-dimethylformamide, thereafter 5 parts by mass of an emulsion including a fluorinated water repellent agent (ASAHIGUARD AG710 sold by Asahi Glass Co., Ltd.) was mixed and dispersed in that.

A resin composition for forming a microporous film was prepared by mixing 50 parts by mass of the resin solutionA, 45.2 parts by mass of the resin solutionB, 50 parts by mass of the polyesterpolyurethane solution (LUCKSKIN 1740-29B sold by Seikoh Chemicals Co., Ltd. ; 28 mass% in solid content; a solvent was N,N-dimethylformamide) and 2 parts by mass of an isocyanate compound (REZAMINE X sold by Dainichiseika Color & Chemicals Mfg. Co., Ltd.) and stirring it vacuum degassing with an agitator. The resin composition was 24 mass% in solid content and 10000 mPa · s/25°C in viscosity. The resin composition contained 3 mass% of the fluorinated water repellent agent in solid, 0.6 mass% of the oil-soluble and water-soluble fluorinated surfactant in solid and 28 mass% of the fumed hydrophobic fine silica powders in solid.

[Producing a waterproof and moisture-permeable fabric]

The resin composition was coated on the surface of the body which abutted against the specular roll with a comma coater to be 90g/m$^2$ in coating quantity. After coated, it was dipped for 2 minutes in a coagulating bath which was an aqueous solution containing 15 mass% of N,N-dimethylformamide at 20 °C to coagulate the resin composition. After coagulated, it was soaped at warm water of 50°C for 5 minutes and squeezed with a mangle. After squeezed, it was dried at 130°C for 2 minutes to form a microporous film of mainly polyurethane. Thereafter, it was treated at 170°C for 1 minute to obtain a waterproof and moisture-permeable fabric. The microporous film was about 25 $\mu$m in thickness and had wholly many microporous each of which was less than 1 $\mu$m in size.

Example 32

[Preparation of a body of a fabric]

A plain weave fabric was woven with 86 warps/2.54 cm and 76 wefts/2.54 cm. The warp consisted of a polyester multi-filament which was 140 decitexes/68 filaments and the weft consisted of a polyester multi-filament which was 166 decitexes/288 filaments. The plain weave fabric was scoured and dyed in 1.0% o.m.f. of disperse dyes of Dianix Blue UN-SE sold by Nippon Kayaku Co., Ltd., Thereafter, a body of a fabric was obtained the same method as the Example 31.

A resin composition was prepared by the same method as the Example 31. A waterproof and moisture-permeable fabric was obtained by the same method as the Example 31 except that the resin composition was coated at 110g/m$^2$. The microporous film was about 30 to 32 $\mu$m in thickness and had wholly many microporous each of which was less than 1 $\mu$m in size.

Example 33

[Preparation of a resin compositionA for forming a nonporous film]

It was prepared to be a resin compositionA for forming a nonporous film which was consisted of the following recipe. The resin compositionA was 17 mass% in solid content and 3500 mPa · s/25°C in viscosity. The resin compositionA hardly contained N,N-dimethylformamide or contained less than 1 mass%.

[Resin compositionA for forming the nonporous film]

Non-yellowing polyurethane                                                                                      50 parts by mass

(continued)

| | |
|---|---|
| (LUCKSKIN U2524 sold by Seikoh Chemicals Co., Ltd.; 25 mass% in solid content) | |
| Mat agent for the non-yellowing polyurethane | 50 parts by mass |
| (LUCKSKIN U2525M sold by Seikoh Chemicals Co., Ltd.; 20 mass% in solid content) | |
| Isopropyl alcohol | 15 parts by mass |
| Toluene | 15 parts by mass |

After forming a microporous film of mainly polyurethane with the same method as the Example 32, the resin compositionA was coated on the surface of the microporous film with a knife coater to be 30g/m² in coating quantity before treated. Thereafter, it was dried at 120°C for 2 minutes to form the nonporous film which was about 5μ m in thickness. After dried, it was treated at 170°C for 1 minute to obtain a waterproof and moisture permeable fabric.

Example 34

After forming a microporous film of mainly polyurethane with the same method as the Example 31, the <Recipe 7> in the Example 5 was coated on the surface of the microporous film with a knife coater to be 5g/m² in coating solid quantity before treated. Thereafter, it was dried at 120°C for 2 minutes to form the nonporous film which was about 1 μm in thickness. After dried, it was treated at 170°C for 1 minute to obtain a waterproof and moisture permeable fabric.

Example 35

[Preparation of a resin compositionA for forming a nonporous film]

It was prepared to be a resin compositionC for forming a nonporous film which was consisted of the following recipe. The resin compositions was 18 mass% in solid content and 3000 kPa · s/25 °C in viscosity.

[Resin compositions for forming the nonporous film]

| | |
|---|---|
| Polyeterpolyurethane | 100 parts by mass |
| (HIMULEN Y-611-124 sold by Dainichiseika Color & Chemicals Mfg. Co., Ltd.; 25 mass% in solid content) | |
| N,N-dimethylformamide | 40 parts by mass |

[Forming a nonporous film]

The resin compositionC was coated on a release surface of a release paper (130TPD sold by Lintec Corporation) with a comma coater to be 55g/m² in coaling quantity. After coated, it was dried at 120°C for 2 minutes to form a nonporous film which was about 10 μm in thickness.

After forming a microporous film of mainly polyurethane with the same method as the Example 32, the above nonporous film was promptly laid on the microporous film before treated. After laid, they were adhered at 120°C and 400kPa, thereafter the release paper was released from them. After released, it was treated at 170 °C for 1 minute to obtain a waterproof and moisture permeable fabric.

Example 36

After forming a microporous film of mainly polyurethane with the same method as the Example 31, the <Recipe 8> of the resin composition for printing the pattern in the Example 6 was coated on the microporous film with a gravure roll to be 6g/m² in coating quantity. A lattice shape was engraved on the gravure roll. The lattice shape was 38 μm in depth and 45% in area. After it was dried at 120°C for 30 seconds, a lattice pattern was formed on the microporous film. Thereafter, it was treated at 170 °C for 1 minute to obtain a waterproof and moisture-permeable fabric having the lattice pattern.

Example 37

After forming a nonporous film of mainly polyurethane with the same method as the Example 34, the <Recipe 8> of the resin composition for printing the pattern in the Example 6 was coated on the nonporous film with the above gravure roll to be 6g/m$^2$ in coating quantity before treated. A lattice shape was engraved on the gravure roll. The lattice shape was 38 μm in depth and 45% in area. After coated, it was dried at 120 °C for 30 seconds to form the lattice pattern on the microporous film. Thereafter, it was treated at 170°C for 1 minute to obtain a waterproof and moisture-permeable fabric having the lattice pattern.

Example 38

A waterproof and moisture-permeable fabric was prepared with the same method as the Example 32. A moisture curing polyurethane hot-melt adhesive of TAKEMELT MA3229 sold by Mitsui-Takeda Chemicals Co., Ltd. was coated on the surface of the microporous film of the waterproof and moisture-permeable fabric with a gravure roll engraving dots at 20 meshes to be 10g/m$^2$ in coating quantity. After coated, the back fabric in the Example 9 was laid on the hot-melt adhesive and pressed at 300 kPa to obtain a waterproof and moisture-permeable fabric having the back fabric.

Example 39

A waterproof and moisture-permeable fabric was prepared with the same method as the Example 33. A moisture curing polyurethane hot-melt adhesive of TAKEMELT MA3229 sold by Mitsui-Takeda Chemicals Co., Ltd. was coated on the surface of the nonporous film of the waterproof and moisture-permeable fabric with a gravure roll engraving dots at 20 meshes to be 10g/m$^2$ in coating quantity. After coated, the back fabric in the Example 9 was laid on the hot-melt adhesive and pressed at 300 kPa to obtain a waterproof and moisture-permeable fabric having the back fabric.

Example 40

[Preparation of a body of a fabric]

A body of a fabric was obtained with the same method as the Example 31 except using an emulsion including water repellent agent (NK-GUARD SCH-02 sold by Nicca Chemical Co., Ltd.; 20 mass% in solid) instead of ASAHIGUARD GS10 sold by Asahi Glass Co., Ltd..

[Preparation of a resin composition for forming a microporous film]

A resin composition was prepared by the same method of the Example 31 except using an emulsion including fluorinated water repellent agent (NUVA N2114 LIQ sold by Clariant Japan Co., Ltd. ; 31 mass% in solid content) instead of ASAHIGUARD AG710 sold by Asahi Glass Co., Ltd.. The resin composition was 24 mass% in solid content and 10000 mPa · s/25°C in viscosity. The resin composition contained 4 mass% of the fluorinated water repellent agent in solid, 0.6 mass% of the oil-soluble and water-voluble fluorinated surfactant in solid and 28 mass% of the fumed hydrophobic fine silica powders in solid.

[Producing a waterproof and maisture-eprmeable fabric]

A waterproof and moisture-permeable fabric was obtained by the same method as the Example 31. The microporous film in the waterproof and moisture-permeable fabric was about 27 to 29 μm in thickness.

Comparative Example 31

[Preparation of a body of a fabric]

A body of a fabric was prepared by the same method as the Example 31.

[Preparation of a resin composition for forming a microporous film]

A transparent and colorless resin solutionA was prepared by the same method as the Example 31. A surfactant solutionA was prepared by the following method. That is, 0.2 parts by mass of oil-soluble and water-soluble fluorinated surfactant (SURFLON S-386 sold by AGC Seimi Chemical Co., Ltd.) was dissolved in 40 parts by mass of N,N-dimethylformamide. The surfactant solutionA differed from the resin solutionB used in the Example 31 in not containing an emulsion including fltiorinated water repellent agent. A resin composition for forming a microporous film was prepared by mixing 50 parts by mass of the resin solutionA, 40.2 parts by mass of the surfactant solultionA, 50 parts by mass of the polyesterpolyurethane solution (LUCKSKIN 1740-29B sold by Seikoh Chemicals Co., Ltd.; 28 mass% in solid content; a solvent was N,N-dimethylformamide) and 2 parts by mass of an isocyanate compound (REZAMINE X sold by Dainichiseika Color & Chemicals Mfg. Co., Ltd.) and stirring it vacuum degassing with an agitator. The resin composition was 24 mass% in solid content and 10000 mPa · s/25°C in viscosity. The resin composition contained 0.6 mass% of the oil-soluble and water-soluble fluorinated surfactant in solid and 29 mass% of the fumed hydrophobic fine silica powders in solid with out the fluorinated water repellent agent.

[Producing a waterproof and moisture-permeable fabric]

A waterproof and moisture-permeable fabric was obtained by the same method as the Example 31. The microporous film in the waterproof and moisture-permeable fabric was about 24 to 26 $\mu$m in thickness and had wholly many microporous each of which was less than 1 $\mu$m in size.

Comparative Example 32

[Preparation of a body of fabric]_

A body of a fabric was prepared by the same method as the Example 31.

[Preparation of a resin composition for forming a microporous film]

A transparent and colorless resin solutionA was prepared by the same method as the Example 31. A resin solutionD was prepared by the following method. That is, 0.2 parts by mass of oil-soluble and water-soluble fluorinated surfactant (SURFLON S-386 sold by AGC Seimi Chemical Co., Ltd.) was dissolved in 40 parts by mass of N,N-dimethylformamide. After dissolved, 20 parts by mass of an emulsion including a fluorinated water repellent agent (ASAHIGUARD AG710 sold by Asahi Glass Co., Ltd.; 19 mass% in solid content) was mixed and dispersed in that to prepare a resin solutionD. A resin composition for forming a microporous film was prepared by mixing 50 parts by mass of the resin solutionA, 60.2 parts by mass of the resin solutionD, 50 parts by mass of the polyesterpolyurethane solution (LUCKSKIN 1740-29B sold by Seikoh Chemicals Co., Ltd. ; 28 mass% in solid content; a solvent was N,N-dimethylformamide) and 2 parts by mass of an isocyanate compound (REZAMINE sold by Dainichiseika Color & Chemicals Mfg, Co., Ltd.) and stirring it vacuum degassing with an agitator. The resin composition was 24 mass% in solid content and 10000 mPa · s/25 °C in viscosity. The resin composition contained 10 mass% of the fluorinated water repellent agent in solid, 0.5 mass% of the oil-soluble and water-soluble fluorinated surfactant in solid and 26 mass% of the fumed hydrophobic fine silica powders in solid.

[Producing a waterproof and moisture- permeable fabric]

A waterproof and moisture-permeable fabric was obtained by the same method as the Example 31. The microporous film in the waterproof and moisture-permeable fabric was about 24 to 26 $\mu$m in thickness and had wholly many microporous each of which was less than 1 $\mu$m in size.

Comparative Example 33

[Preparation of a body of a fabric]

A body of a fabric was prepared by the same method as the Example 31.

[Preparation of a resin composition for forming a microporous film]

A transparent and colorless resin solutionA was prepared by the same method as the Example 31. A resin solutionB was prepared by mixing and dispersing an emulsion including a fluorinated water repellent agent (ASAHIGUARD AG710 sold by Asahi Glass Co., Ltd.; 19 mass% in solid content) with 40 parts by mass of N,N-dimethylformamide, without the oil-soluble and water-soluble fluorinated surfactant. A resin composition for forming a microporous film was prepared by mixing 50 parts by mass of the resin solutionA, 45 parts by mass of the resin solution, 50 parts by mass of the polyesterpolyurethane solution (LUCKSKIN 1740-29B sold by Seikoh Chemicals Co., Ltd.; 28 mass% in solid content; a solvent was N,N-dimethylformamide) and 2 parts by mass of an isocyanate compound (REZAMINE X sold by Dainichiseika Color & Chemicals Mfg. Co., Ltd.) and stirring it vacuum degassing with an agitator. The resin composition was 24 mass% in solid content and 10000 mPa · s/25°C in viscosity. The resin composition contained 3 mass% of the fluorinated water repellent agent in solid and 28 mass% of the fumed hydrophobic fine silica powders in solid without the fluorinated surfactant.

[Producing a waterproof and moisture-permeable fabric]

A waterproof and moisture-permeable fabric was obtained by the same method as the Example 31. The microporous film in the waterproof and moisture-permeable fabric was about 24 to 26 μm in thickness and had wholly many microporous each of which was less than 1 μm in size.

Comparative Example 34

[Preparation of a body of a fabric

A body of a fabric was prepared by the same method as the Example 31.

[Preparation of a resin composition for forming a microporous film]

A transparent and colorless resin solutionA was prepared by the same method as the Example 31. A resin solutionE was prepared by the following method. That is, 1 part by mass of oil-soluble and water-soluble fluorinated surfactant (SURFLON S-386 sold by AGC Seimi Chemical Co., Ltd.) was dissolved in 40 parts by mass of N,N-dimethylformamide. After dissolved, 5 parts by mass of an emulsion including a fluorinated water repellent agent (ASAHIGUARD AG710 sold by Asahi Glass Co., Ltd.; 19 mass% in solid content) was mixed and dispersed in that to prepare a resin solutionD.

A resin composition for forming a microporous film was prepared by mixing 50 parts by mass of the resin solutionA, 46 parts by mass of the resin solutionE, 50 parts by mass of the polyesterpolyurethane solution (LUCKSKIN 1740-29B sold by Seikoh Chemicals Co., Ltd.; 28 mass% in solid content; a solvent was N,N-dimethylformamide) and 2 parts by mass of an isocyanate compound(REZAMINE X sold by Dainichiseika Color & Chemicals Mfg. Co., Ltd.) and stirring it vacuum degassing with an agitator. The resin composition was 25 mass% in solid content and 10000 mPa · s/25°C in viscosity. The resin composition contained 3 mass% of the fluorinated water repellent agent in solid, 3 mass% of the oil-soluble and water-soluble fluorinated surfactant in solid and 27 mass% of the fumed hydrophobic fine silica powders in solid without the fluorinated surfactant.

[Producing a waterproof and moisture-permeable fabric]

A waterproof and moisture-permeable fabric was obtained by the same method as the Example 31. The microporous film in the waterproof and moisture-permeable fabric was about 24 to 26 μm in thickness and had wholly many microporous each of which was less than 1 μm in size.

A water pressure resistance (kPa), wash resistance (%) and moisture permeability (g/m$^2$ · 24hrs) were measured with the above method about the waterproof and moisture-permeable fabrics of the Examples 31-40 and Comparative Examples 31-34. The results were shown in Table 3.

[Table 3]

| | Water pressure resistance | | | |
| | Original | after 100 washing | Wash resistance | Moisture permeability |
| --- | --- | --- | --- | --- |
| Ex.31 | 192 | 136 | 71 | 11892 |
| Ex.32 | 251 | 188 | 75 | 10875 |
| Ex.33 | 405 | 328 | 81 | 8092 |
| Ex.34 | 250 | 190 | 76 | 10638 |
| Ex.35 | 580 | 540 | 93 | 8400 |
| Ex.36 | 198 | 152 | 77 | 10532 |
| Ex.37 | 258 | 203 | 79 | 9854 |

(continued)

| | Water pressure resistance | | Wash resistance | Moisture permeability |
|---|---|---|---|---|
| | Original | after 100 washing | | |
| Ex.38 | 268 | 214 | 80 | 9240 |
| Ex.39 | 435 | 360 | 83 | 7430 |
| Ex.40 | 208 | 158 | 76 | 11876 |
| Com. Ex. 31 | 181 | 80 | 44 | 11534 |
| Com. Ex. 32 | 120 | 67 | 56 | 11988 |
| Com. Ex. 33 | 115 | 48 | 42 | 11620 |
| Com. Ex. 34 | 98 | 39 | 40 | 17783 |

The waterproof and moisture-permeable fabrics of the Examples 31-40 were superior in the wash resistance than the Comparative Examples 31-34. The waterproof and moisture-permeable fabric of the Comparative Example 31 was inferior in the water pressure resistance and the wash resistance because not containing the fluorinated water repellent agent in the microporous film. The waterproof and moisture-permeable fabric of the Comparative Example 32 was inferior in the water pressure resistance and the wash resistance because excessively containing the fluorinated water repellent agent and being uneven when the microporous film was formed. The waterproof and moisture-permeable fabric of the Comparative Example 33 was inferior in the water pressure resistance and the wash resistance because not containing the oil-soluble fluorinated surfactant in the microporous film. The waterproof and moisture-permeable fabric of the Comparative Example 34 was inferior in the water pressure resistance and the wash resistance because excessively containing the oil-soluble surfactant in the microporous film. That is, existing the specified fluorinated water repellent agent and oil-soluble fluorinated surfactant in the microporous film, the waterproof and moisture-permeable fabric was superior in the water pressure resistance and the wash resistance.

Example 41

[Preparation of a resin composition for forming a microporous film]

At first, a mixed dispersion was prepared by the following method. That is, 0.15 parts by mass of oil-soluble and water-soluble fluorinated surfactant (SURFLON S-386 sold by AGC Seimi Chemical Co., Ltd.) was dissolved in 35 parts by mass of N,N-dimethylformamide, thereafter 6 parts by mass of fluorinated water repellent agent (NUVA N2114 LIQ sold by Clariant Japan Co., Ltd.; 31 mass% in solid content) was mixed and dispersed in that. Thereafter, a resin composition was prepared by mixing 100 parts by mass of the polyesterpolyurethane solution (LUCKSKIN UJ8517 sold by Seikoh Chemicals Co., Ltd. ; 25 mass% in solid content), 35 parts by mass of the polyurethane solution (LUCKSKIN UJ8518M sold by Seikoh Chemicals Co., Ltd.) and 1 part by mass of a cross-linkable isocyanate compound (CORONATE HX sold by Nippon Polyurethane Industry Co., Ltd.) and stirring it vacuum degassing with an agitator. The LUCKSKIN UJ8518M contained 20 mass% in solid content and fine silica powders were contained 60 mass% in the solid. The fine silica powders were fumed. The resin composition was 20 mass% in solid content and 10000 mPa · s/25°C in viscosity. The resin composition contained 5 mass% of the fluorinated water repellent agent in solid, 0.4 mass% of the fluorinated surfactant in solid and 12 mass% of the fumed fine silica powders in solid.

[producing a waterproof and moisture-permeable fabric]

The resin composition was coated on the surface of the body which abutted against the specular roll in the Example 1 with a comma coater to be 100g/m$^2$ in coating quantity. After coated, it was dipped for 2 minutes in a coagulating bath which was an aqueous solution containing 10 mass% of N,N-dimethylformamide at 20 °C to coagulate the resin composition. After coagulated, it was soaped at warm water of 50°C for 5 minutes and squeezed with a mangle. After squeezed, it was dried at 130°C for 2 minutes to form a microporous film of mainly polyurethane. Thereafter, it was treated at 170°C for 1 minute to obtain a waterproof and moisture-permeable fabric. The microporous film was about 60 $\mu$m in thickness and had wholly many microporous each of which was less than 1 $\mu$m in size. However, the microporous film had a little pores each of which was 10 to 40 $\mu m$ in size.

Example 42

[Preparation of a resin composition for forming a nonporous film]

At first, a mixed dispersion was prepared by the following method. That is, a surfactant solutionB was prepared by dissolving 0.25 parts by mass of oil-soluble and water-soluble fluorinated surfactant (SURFLON S-386 sold by AGC Seimi Chemical Co., Ltd.) in 5 parts by mass of toluene. A mixture was prepared by mixing 6 parts by mass of fluorinated water repellent agent (NUVA N2114 LIQ sold by Clariant Japan Co., Ltd.; 31 mass% in solid content) with 15 parts by mass of isopropyl alcohol. The mixed dispersion was prepared by mixing 5.25 parts by mass of the surfactant solutionB with 20 parts by mass of the mixture. Thereafter, a resin compositionD for forming a nonporous film was prepared by mixing 50 parts by mass of the non-yellowing polyurethane (LUCKSKIN U2524 sold by Seikoh Chemicals Co., Ltd.) with 50 parts by mass of the mat agent for the non-yellowing polyurethane. The resin compositionD was 19 mass% in solid content and 4000 mPa · s/25°C in viscosity. The resin compositions hardly contained N,N-dimethylformamide or contained less than 1 mass%.

After forming a microporous film of mainly polyurethane with the same method as the Example 41, the resin compositionD was coated on the surface of the microporous film with a knife coater to be 30g/m$^2$ in coating solid quantity before treated. Thereafter, it was dried at 130°C for 1 minute to form the nonporous film which was about 5 μm in thickness. After dried, it was treated at 170°C for 1 minute to obtain a waterproof and moisture permeable fabric.

Example 43

[Preparation of a resin composition for forming a nonporous film]

A resin compositionE for forming a nonporous film was prepared by mixing 50 parts by mass of the non-yellowing polyurethane (LUCKSKIN U2524 sold by Seikoh Chemicals Co., Ltd.) with 50 parts by mass of the mat agent for the non-yellowing polyurethane in the mixed solvent of 5 parts by mass of toluene and 15 parts by mass of isopropylalcohol. The resin compositionE was 19 mass% in solid content and 4000 mPa · s/25°C in viscosity. The resin compositionE hardly contained N,N-dimethylformamide or contained less than 1 mass%.

After forming a microporous film of mainly polyurethane with the same method as the Example 41, the resin compositionE was coated on the surface of the microporous film with a knife coater to be 30g/m$^2$ in coating solid quantity before treated. Thereafter, it was dried at 130°C for 1 minute to form the nonporous film which was about 5 μm in thickness. After dried, it was treated at 170°C for 1 minute to obtain a waterproof and moisture permeable fabric.

Example 44

After forming a microporous film of mainly polyurethane with the same method as the Example 41, the <Recipe 8> of the resin composition for printing the pattern in the Example 6 was coated on the microporous film with the above gravure roll to be 6g/m$^2$ in coating quantity before treated. A lattice shape was engraved on the gravure roll. The lattice shape was 38 μm in depth and 45% in area. After coated, it was dried at 120°C for 30 seconds to form the lattice pattern on the microporous film. Thereafter, it was treated at 170°C for 1 minute to obtain a waterproof and moisture-permeable fabric having the lattice pattern.

Example 45

After forming a microporous film of mainly polyurethane with the same method as the Example 41, a moisture curing polyurethane hot-melt adhesive of TAKEMELT MA3229 sold by Mitsui-Takeda Chemicals Co., Ltd. was coated on the surface of the microporous film of the waterproof and moisture-permeable fabric with a gravure roll engraving dots at 20 meshes to be 10g/m$^2$ in coating quantity. After coated, the back fabric in the Example 9 was laid on the hot-melt adhesive and pressed at 300 kPa to obtain a waterproof and moisture-permeable fabric having the back fabric.

Comparative Example 41

[Preparation of a resin composition for forming a microporous film]

A mixed dispersion was prepared by mixing 6 parts by mass of fluorinated water repellent agent (NUVA N2114 LIQ sold by Clariant Japan Co., Ltd.; 31 mass% in solid content) with 35 parts by mass of N,N-dimethylformamide without using an oil-soluble and water-soluble fluorinated surfactant. A resin composition was prepared by mixing 100 parts by mass of the polyesterpolyurethane solution (LUCKSKIN UJ8517 sold by Seikoh Chemicals Co., Ltd.; 25 mass% in solid content), 35 parts by mass of the polyurethane solution (LUCKSKIN UJ8518M sold by Seikoh Chemicals Co., Ltd.) and 1 part by mass of a cross-linkable isocyanate compound (CORONATE HX sold by Nippon Polyurethane Industry Co., Ltd.) and stirring it vacuum degassing with an agitator. The LUCKSKIN UJ8518M contained 20 mass% in solid content and fine silica powders were contained 60 mass% in the solid. The fine silica powders were fumed. The resin composition was 20 mass% in solid content and 10000 mPa · s/25°C in viscosity. The resin composition contained 5 mass% of the fluorinated water repellent agent in solid and 12 mass% of the fumed fine silica powders in solid but did not contain an oil-soluble and water-soluble fluorinated surfactant.

[Producing a waterproof and moisture-permeable fabric]

By using the body of the fabric in the Example 1 and the above resin composition, a waterproof and moisture-permeable fabric was obtained with the same method as the Example 41. The microporous film was about 60 $\mu$ m in thickness and had wholly many microporous each of which was less than 1 $\mu$ m in size. The microporous film had additionally pores each of which was 10 to 40 $\mu$m in size, but the number of the pores was few than the microporous.

Comparative Example 42

[Preparation of a resin composition for forming a microporous film]

A surfactant solutionC was prepared by dissolving 0.15 parts by mass of oil-soluble and water-soluble fluorinated surfactant (SURFLON S-386 sold by AGC Seimi Chemical Co., Ltd.) in 35 parts by mass of N, N-dimethylformamide. A resin composition was prepared by mixing 100 parts by mass of the polyesterpolyurethane solution (LUCKSKIN UJ8517 sold by Seikoh Chemicals Co., Ltd.; 25 mass% in solid content), 35 parts by mass of the polyurethane solution (LUCKSKIN UJ8518M sold by Seikoh Chemicals Co., Ltd.) and 1 part by mass of a cross-linkable isocyanate compound (CORONATE HX sold by Nippon Polyurethane Industry Co., Ltd.) with 35.15 parts by mass of the surfactant solutionC and stirring it vacuum degassing with an agitator. The LUCKSKIN UJ8518M contained 20 mass% in solid content and fine silica powders were contained 60 mass% in the solid. The fine silica powders were fumed. The resin composition was 19 mass% in solid content and 10000 mPa · s/25°C in viscosity. The resin composition contained 0.5 mass% of the oil-soluble and water-soluble fluorinated surfactant in solid and 12 mass% of the fumed fine silica powders in solid but did not contain a fluorinated water repellent agent.

[Producing a waterproof and moisture-permeable fabric]

By using the body of the fabric in the Example 1 and the above resin composition, a waterproof and moisture-permeable fabric was obtained with the same method as the Example 41. The microporous film was about 60 $\mu$m in thickness and had wholly many microporous each of which was less than 1 $\mu$m in size. The microporous film had additionally pores each of which was 10 to 40 $\mu$m in size, but the number of the pores was few than the microporous.

Comparative Example 43

[Preparation of a resin composition for forming a microporous film]

A resin composition was prepared by mixing 100 parts by mass of the polyesterpolyurethane solution (LUCKSKIN UJ8517 sold by Seikoh Chemicals Co., Ltd.; 25 mass% in solid content), 35 parts by mass of the polyurethane solution (UJCKSKIN UJ8518M sold by Seikoh Chemicals Co., Ltd.) and 1 part by mass of a cross-linkable isocyanate compound (CORONATE HX sold by Nippon Polyurethane Industry Co., Ltd.) with 35 parts by mass of N,N-dimethylformamide and stirring it vacuum degassing with an agitator. The LUCKSKIN UJ8518M contained 20 mass% in solid content and fine silica powders were contained 60 mass% in the solid. The fine silica powders were fumed. The resin composition was 19 mass% in solid content and 10000 mPa · s/25°C in viscosity. The resin composition contained 12 mass% of the fumed fine silica powders in solid but did not contain an oil-soluble and water-soluble fluorinated surfactant and a fluorinated water repellent agent.

[Producing a waterproof and moisture-permeable fabric]

By using the body of the fabric in the Example 1 and the above resin composition, a waterproof and moisture-permeable fabric was obtained with the same method as the Example 41. The microporous film was about 60 $\mu$ m in thickness and had wholly many microporous each of which was less than 1 $\mu$ m in size. The microporous film had additionally pores each of which was 10 to 40 $\mu$m in size, but the number of the pores was few than the microporous.

A water pressure resistance (kPa), wash resistance (%) and moisture permeability (g/m$^2$ · 24hrs) were measured with the above method about the waterproof and moisture-permeable fabrics of the Examples 41-45 and Comparative Examples 41-43. The results were shown in Table 4.

Table 4]

| | Water pressure resistance | | | |
| --- | --- | --- | --- | --- |
| | Original | after 100 washing | Wash resistance | Moisture permeability |
| Ex.41 | 145 | 95 | 66 | 9989 |
| Ex.42 | 238 | 186 | 78 | 7266 |
| Ex.43 | 229 | 165 | 72 | 7028 |
| Ex.44 | 157 | 118 | 75 | 8990 |
| Ex.45 | 170 | 136 | 80 | 9190 |
| Com. Ex. 41 | 115 | 69 | 60 | 9893 |
| Com. Ex. 42 | 93 | 33 | 35 | 9436 |
| Com. Ex.43 | 136 | 54 | 40 | 9275 |

The waterproof and moisture-permeable fabrics of the Examples 41-45 were superior in the water pressure resistance and the wash resistance than the Comparative Examples 41-43. The waterproof and moisture-permeable fabric of the Comparative Example 41 was inferior in the water pressure resistance and the wash resistance because not containing the oil-soluble fluorinated surfactant in the microporous film. The waterproof and moisture-permeable fabric of the Comparative Example 42 was inferior in the water pressure resistance and the wash resistance because not containing the fluorinated water repellent agent in the microporous film. The waterproof and moisture-permeable fabric of the Comparative Example 43 was inferior in the water pressure resistance and the wash resistance because not containing the fluorinated water repellent agent and the oil-soluble fluorinated surfactant in the microporous film. Some waterproof and moisture-permeable fabric of the Examples 41-45 was lower in the water pressure resistance than the Comparative Example 31-34 because a species of used polyurethanes were different. Specially mentioning, the waterproof and moisture-permeable fabric of the Examples 31-45 were superior in the wash resistance than all Comparative Examples. Being the specified fluorinated water repellent agent, oil-soluble fluorinated surfactant and fine silica powders in the microporous film, the waterproof and moisture-permeable fabric was superior in the wash resistance.

Example 51

A waterproof and moisture-permeable fabric was obtained with the same method as the Example 31 except using 0.5 parts by mass of oil-soluble and water-soluble fluorinated surfactant (SURFLON S-386 sold by AGC Seimi Chemical Co., Ltd.) instead of 0.2 parts by mass of it. The used resin composition was 24 mass% in solid content and 10000 mPa · s/25°C in viscosity. The used resin composition contained 28 mass% of the fumed hydrophobic fine silica powders in solid, 1.4 mass% of the fluorinated surfactant in solid and 3 mass% of the fluorinated water repellent agent in solid.

Example 52

A waterproof and moisture-permeable fabric was obtained with the same method as the Example 31 except using 0.2 parts by mass of oil-soluble fluorinated surfactant (SURFLON S-611 sold by AGC Seimi Chemical Co., Ltd..; it was not water-soluble.) instead of 0.2 parts by mass of oil-soluble and water-soluble fluorinated surfactant (SURFLON S-386 sold by AGC Seimi Chemical Co., Ltd.). The used resin composition was 24 mass% in solid content and 10000 mPa · s/25°C in viscosity. The used resin composition contained 28 mass% of the fumed hydrophobic fine silica powders in solid, 0.6 mass% of the fluorinated surfactant in solid and 3 mass% of the fluorinated water repellent agent in solid.

Example 53

A waterproof and moisture-permeable fabric was obtained with the same method as the Example 31 except using 0.2 parts by mass of oil-soluble fluorinated surfactant (SURFLON S-651 sold by AGC Seimi Chemical Co., Ltd.; it was not water-soluble.) instead of 0.2 parts by mass of oil-soluble and water-soluble fluorinated surfactant (SURFLON S-386 sold by AGC Seimi Chemical Co., Ltd.). The used resin composition was 24 mass% in solid content and 10000 mPa · s/25°C in viscosity. The used resin composition contained 28 mass% of the fumed hydrophobic fine silica powders in solid, 0.6 mass% of the fluorinated surfactant in solid and 3 mass% of the fluorinated water repellent agent in solid.

Example 54

A waterproof and moisture-permeable fabric was obtained with the same method as the Example 31 except using 0.2 parts by mass of oil-soluble and water-soluble fluorinated surfactant (SURFLON S-243 sold by AGC Seimi Chemical Co., Ltd.) instead of 0.2 parts by mass of oil-soluble and water-soluble fluorinated surfactant (SURFLON S-386 sold by AGC Seimi Chemical Co., Ltd.). The used resin composition was 24 mass% in solid content and 10000 mPa · s/25°C in viscosity. The used resin composition contained 28 mass% of the fumed hydrophobic fine silica powders in solid, 0.6 mass% of the fluorinated surfactant in solid and 3 mass% of the fluorinated water repellent agent in solid.

Comparative Example 51

A waterproof and moisture-permeable fabric was obtained with the same method as the Example 31 except using 0.6 parts by mass of water-soluble fluorinated surfactant (SURFLON S-241 sold by AGC Seimi Chemical Co., Ltd.; 30mass% in solid content; it was not oil-soluble.) instead of 0.2 parts by mass of oil-soluble and water-soluble fluorinated surfactant (SURFLON S-386 sold by AGC Seimi Chemical Co., Ltd.). The used resin composition was 24 mass% in solid content and 10000 mPa · s/25°C in viscosity. The used resin composition contained 28 mass% of the fumed hydrophobic fine silica powders in solid, 0.6 mass% of the fluorinated surfactant in solid and 3 mass% of the fluorinated water repellent agent in solid.

Comparative Example 52

A waterproof and moisture-permeable fabric was obtained with the same method as the Example 31 except using 1.5 parts by mass of water-soluble fluorinated surfactant (SURFLON S-241 sold by AGC Seimi Chemical Co., Ltd.; 30mass% in solid content; it was not oil-soluble.) instead of 0.2 parts by mass of oil-soluble and water-soluble fluorinated surfactant (SURFLON S-386 sold by AGC Seimi Chemicals Co., Ltd.). The used resin composition was 24 mass% in solid content and 10000 mPa · s/25°C in viscosity. The used resin composition contained 28 mass% of the fumed hydrophobic fine silica powders in solid, 1.4 mass% of the fluorinated surfactant in solid and 3 mass% of the fluorinated water repellent agent in solid.

Comparative Example 53

A waterproof and moisture-permeable fabric was obtained with the same method as the Example 31 except using 0.6 parts by mass of water-soluble fluorinated surfactant (SURFLON S-221 sold by AGC Seimi Chemical Co., Ltd.; 30mass% in solid content; it was not oil-soluble.) instead of 0.2 parts by mass of oil-soluble and water-soluble fluorinated surfactant (SURFLON S-386 sold by AGC Seimi Chemical Co., Ltd.). The used resin composition was 24 mass% in solid content and 10000 mPa · s/25°C in viscosity. The used resin composition contained 28 mass% of the fumed hydrophobic fine silica powders in solid, 0.6 mass% of the fluorinated surfactant in solid and 3 mass% of the fluorinated water repellent agent in solid.
A water pressure resistance (kPa), wash resistance (%) and moisture permeability (g/m$^2$ · 24hrs) were measured with the above method about the waterproof and moisture-permeable fabrics of the Examples 51-54 and Comparative Examples 51-53. The results were shown in Table 5.
[Table 5]

| | Water pressure resistance | | | |
| | Original | after 100 washing | Wash resistance | Moisture permeability |
|---|---|---|---|---|
| Ex.51 | 180 | 133 | 74 | 11824 |
| Ex.52 | 162 | 115 | 71 | 11790 |
| Ex.53 | 152 | 93 | 61 | 12707 |
| Ex.54 | 118 | 78 | 66 | 12129 |
| Com. Ex. 51 | 82 | 43 | 52 | 11391 |
| Com. Ex. 52 | 76 | 37 | 49 | 11832 |
| Com. Ex. 53 | 92 | 44 | 48 | 12206 |

The waterproof and moisture-permeable fabrics of the Examples 51-54 were superior in the water pressure resistance and the wash resistance than the Comparative Examples 51-53. The waterproof and moisture-permeable fabrics of the Comparative Examples 51-53 were inferior in the water pressure resistance and the wash resistance because containing the water-soluble fluorinated surfactant but not an oil-soluble fluorinated surfactant in the microporous film. That is, existing the specified fluorinated water repellent agent, oil-soluble but not water-soluble fluorinated surfactant and fine silica powders in the microporous film, the waterproof and moisture-permeable fabric was superior in the wash resistance.

## Claims

1. A waterproof and moisture-permeable fabric which comprises of a body of a fabric and a microporous film of mainly polyurethane resin laid on the surface of the body, wherein;
the microporous film includes 1 to 9 mass% of fluorinated water repellent agent and 0.1 to 2 mass% of oil-soluble fluorinated surfactant.

2. A waterproof and moisture-permeable fabric according to claim 1 wherein the microporous film additionally includes 3 to 45 mass% of silica fine powders.

3. A waterproof and moisture-permeable fabric according to claim 1 or 2 wherein the fluorinated surfactant is oil-soluble and water-soluble.

4. A waterproof and moisture-permeable fabric according to claim 1 or 2 wherein the fluorinated surfactant has a hydrophobic group of a perfluoroalkyl group having 1 to 6 carbon atoms and has a hydrophilic group of a polyoxyethylene group or polyoxypropylene group.

5. A waterproof and moisture-permeable fabric according to claim 1 or 2 wherein the fluorinated water repellent agent is obtained by polymerizing an acrylate compound having a perfluoroalkyl group having 1 to 6 carbon atoms in a side chain.

6. A waterproof and moisture-permeable fabric according to claim 1 or 2 wherein the body of the fabric is water-repellent.

7. A waterproof and moisture-permeable fabric according to claim 6 wherein the body of the fabric is water-repellent by using a fluorinated water repellent agent which is obtained by polymerizing an acrylate compound having a perfluoroalkyl group having 1 to 6 carbon atoms in a side chain.

8. A waterproof and moisture-permeable fabric according to claim 1 or 2 wherein a pattern is printed on the surface of the microporous film.

9. A waterproof and moisture-permeable fabric according to claim 1 or 2 wherein an nonporous film of mainly polyurethane resin is laid on the surface of the microporous film.

10. A waterproof and moisture-permeable fabric according to claim 9 wherein a pattern is printed on the surface of the nonporous film.

11. A waterproof and moisture-permeable fabric according to claim 1 or 2 wherein the microporous film adheres to a back fabric with an adhesive agent.

12. A waterproof and moisture-permeable fabric according to claim 9 wherein the nonporous film adheres to a back fabric with an adhesive agent.

13. A method for producing a waterproof and moisture-permeable fabric comprising of;
preparing a resin composition which includes mainly polyurethane resin, 1 to 9 mass% of fluorinated water repellent agent and 0.1 to 2 mass% of oil-soluble fluorinated surfactant dissolving or dispersing in N,N-dimethylformamide, for forming a microporous film,
coating the resin composition for forming the microporous film on a surface of a body of a fabric, thereafter,
dipping in a solution including less 30 mass% of N,N-dimethylformamide for coagulating the resin composition to form the microporous film.

EP 2 381 031 A1

**14.** A method for producing a waterproof and moisture-permeable fabric according to claim 13 wherein silica fine powders are additionally dispersed in the resin composition for forming the microporous film.

**15.** A method for producing a waterproof and moisture-permeable fabric comprising of;
preparing a resin composition which includes mainly polyurethane resin, 1 to 9 mass% of fluorinated water repellent agent and 0.1 to 2 mass% of oil-soluble fluorinated surfactant dissolving or dispersing in organic solvent and/or water, for forming a microporous film,
coasting the resin composition for forming the microporous film on a surface of a body of a fabric, thereafter,
vaporizing the organic solvent and/or water to form the microporous film.

**16.** A method for producing a waterproof and moisture-permeable fabric comprising of;
preparing a resin composition which includes mainly polyurethane resin, 1 to 9 mass% of fluorinated water repellent agent and 0.1 to 2 mass% of oil-soluble fluorinated surfactant dissolving or dispersing in N,N-dimethylformamide, for forming a microporous film,
coating the resin composition for forming the microporous film on a surface of a release sheet, thereafter,
dipping in a solution including less 30 mass% of N,N-dimethylformamide for coagulating the resin composition to form the microporous film,
peeling the microporous film from the release sheet, and
laying the microporous film and adhering onto a body of a fabric with an adhesive agent.

**17.** A method for producing a waterproof and moisture-permeable fabric according to claim 16 wherein silica fine powders are additionally dispersed in the resin composition for forming the microporous film.

**18.** A method for producing a waterproof and moisture-permeable fabric according to claim 16 or 17 wherein the release sheet is a release fabric which is air permeability.

**INTERNATIONAL SEARCH REPORT**

| International application No. |
| --- |
| PCT/JP2010/050467 |

A.   CLASSIFICATION OF SUBJECT MATTER
*D06M15/564(2006.01)i*

According to International Patent Classification (IPC) or to both national classification and IPC

B.   FIELDS SEARCHED

Minimum documentation searched (classification system followed by classification symbols)
D06M11/00-15/715, B32B1/00-43/00, D06N1/00-7/06

Documentation searched other than minimum documentation to the extent that such documents are included in the fields searched
Jitsuyo Shinan Koho          1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 7-305280 A  (Achilles Corp.),<br>21 November 1995 (21.11.1995),<br>all references<br>(Family: none) | 1-18 |
| A | JP 7-166479 A  (Unitika Ltd.),<br>27 June 1995 (27.06.1995),<br>all references<br>(Family: none) | 1-18 |
| A | JP 1-320006 A  (Toray Industries, Inc.),<br>26 December 1989 (26.12.1989),<br>all references<br>(Family: none) | 1-18 |

☐   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 April, 2010 (16.04.10) | Date of mailing of the international search report<br>    27 April, 2010 (27.04.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7166479 A